(19) **Europäisches Patentamt**
**European Patent Office**
**Office européen des brevets**

(11) **EP 1 448 403 B1**

(12) **EUROPÄISCHE PATENTSCHRIFT**

(45) Veröffentlichungstag und Bekanntmachung des Hinweises auf die Patenterteilung:
**27.02.2008 Patentblatt 2008/09**

(21) Anmeldenummer: **02802968.4**

(22) Anmeldetag: **07.11.2002**

(51) Int Cl.:
***B60W 10/10*** *(2006.01)* ***B60W 10/06*** *(2006.01)*

(86) Internationale Anmeldenummer:
**PCT/DE2002/004143**

(87) Internationale Veröffentlichungsnummer:
**WO 2003/041990 (22.05.2003 Gazette 2003/21)**

(54) **SYSTEM UND VERFAHREN ZUR VORGABE EINES MOTORDREHMOMENTES UND EINER GETRIEBEÜBERSETZUNG BEI EINEM FAHRZEUG MIT KONTINUIERLICH VERSTELLBAREM GETRIEBE**

SYSTEM AND METHOD FOR THE SETTING OF AN ENGINE TORQUE AND A GEARBOX RATIO IN A VEHICLE WITH A CONTINUOUSLY VARIABLE GEARBOX

SYSTEME ET PROCEDE POUR DETERMINER UN COUPLE MOTEUR ET UN RAPPORT DE TRANSMISSION DANS UN VEHICULE A BOITE DE VITESSES REGLABLE EN CONTINU

(84) Benannte Vertragsstaaten:
**DE FR GB**

(30) Priorität: **10.11.2001 DE 10155372**

(43) Veröffentlichungstag der Anmeldung:
**25.08.2004 Patentblatt 2004/35**

(73) Patentinhaber: **ROBERT BOSCH GMBH**
**70442 Stuttgart (DE)**

(72) Erfinder:
• **LUH, Joachim**
**74321 Bietigheim-Bissingen (DE)**

• **PAEULGEN, Markus**
**73728 Esslingen a.N. (DE)**
• **SEIDEL, Frank**
**70439 Stuttgart (DE)**
• **SENGER, Karl-Heinz**
**48331 Farmington Hills (US)**
• **RIES-MUELLER, Klaus**
**74906 Bad Rappenau (DE)**

(56) Entgegenhaltungen:
WO-A-00/38943 WO-A-93/00531
WO-A-97/25555 WO-A-99/34136
DE-A- 10 010 764 DE-A- 19 814 483
US-A- 6 027 425 US-A- 6 157 885

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 448 403 B1

**EP 1 448 403 B1**

## Beschreibung

Die Erfindung betrifft ein System zur Vorgabe eines Motordrehmomentes und einer Getriebeübersetzung bei einem Fahrzeug mit kontinuierlich verstellbarem Getriebe ("continuous variable transmission" (CVT)) mit Mitteln zum Bestimmen eines Soll-Motordrehmomentes unter Berücksichtigung eines einen Fahrerwunsch repräsentierenden Signals, Mitteln zum Bestimmen einer Soll-Getriebeübersetzung unter Berücksichtigung eines einen Fahrerwunsch repräsentierenden Signals und Mitteln zum Ermitteln des den Fahrerwunsch repräsentierenden Signals. Die Erfindung betrifft ferner ein Verfahren zur Vorgabe eines Motordrehmomentes und einer Getriebeübersetzung bei einem Fahrzeug mit kontinuierlich verstellbarem Getriebe mit den Schritten: Ermitteln eines einen Fahrerwunsch repräsentierenden Signals, Bestimmen eines Soll-Motordrehmomentes unter Berücksichtigung des den Fahrerwunsch repräsentierenden Signals und Bestimmen einer Soll-Getriebeübersetzung unter Berücksichtigung des den Fahrerwunsch repräsentierenden Signals.

## Stand der Technik

Kontinuierlich verstellbare Getriebe (CVT) umfassen im Wesentlichen zwei Kegelradpaare und ein beispielsweise als Schubgliederband ausgelegtes Umschlingungsteil. Dabei ist eines der Kegelradpaare mit einem Antrieb verbunden, beispielsweise einem Verbrennungsmotor, während das andere Kegelradpaar mit einem Abtrieb verbunden ist. Zur Einstellung der Übersetzung des CVT-Getriebes und der Spannung des Umschlingungsteils bestehen das Antriebskegelradpaar und das Abtriebskegelradpaar im Allgemeinen aus je einem axial feststehenden und einem axial beweglichen Kegelrad. Das Antriebskegelradpaar wird auch als Antriebsscheibe oder Primärscheibe bezeichnet; das Abtriebskegelradpaar wird auch als Abtriebsscheibe beziehungsweise Sekundärscheibe bezeichnet. Die Anpressung der axial beweglichen Kegelräder gegen das Umschlingungsteil erfolgt im Allgemeinen durch Aufbau eines hydraulischen Drucks, beispielsweise durch eine Pumpe. Durch eine geeignete Wahl der Abstände beziehungsweise der Anpressdrükke der Kegelräder kann die gewünschte Übersetzung des CVT-Getriebes und die erforderliche Spannung des Umschlingungsteils eingestellt werden. Die Pumpe für den hydraulischen Antrieb der Kegelräder kann beispielsweise durch den Verbrennungsmotor angetrieben werden. Für die Kraftübertragung vom Verbrennungsmotor zum Antriebskegelradpaar kann beispielsweise ein Drehmomentenwandler und ein Planetensatz mit Kupplungen für Vorwärts- und Rückwärtsfahrt vorhanden sein.

Die Zugkraft, die von den Antriebsrädern eines Kraftfahrzeugs erzeugt wird, ist durch das Drehmoment am Getriebeausgang (Abriebsmoment) beziehungsweise durch die Getriebe-Ausgangsleistung bestimmt. Das Abtrieb Abtriebsmoment hängt wesentlich von den beiden Größen Getriebeübersetzung und Motormoment ab. Bei einem mit einem stufenlosen Getriebe ausgerüsteten Fahrzeug kann somit ein aufgrund des Zugkraftwunsches des Fahrers definiertes Abtriebsmoment durch praktisch beliebig viele Kombinationen aus Motormoment und Getriebeübersetzung realisiert werden. Um die in der aktuellen Fahrsituation jeweils geeignete Kombination von Motormoment und Übersetzung zu ermitteln und einzustellen wurde bereits vorgeschlagen, ein Kennfeld oder einen Berechnungsablauf vorzusehen, so dass ein Sollwert für die Getriebeübersetzung als Funktion der Abtriebsdrehzahl und der Stellung des Fahrpedals oder des Sollwertes für das Getriebeabtriebsmoment gemäß vorgegebner Betriebsstrategien ermittelt werden kann. Der Sollwert des Motordrehmomentes wird in Abhängigkeit der ermittelten Getriebeübersetzung bestimmt .

Aus der US 6 027 425 ist ein gattungsgemäßes System zur Vorgabe eines Motordrehmomentes und einer Getriebeübersetzung bei einem Fahrzeug mit kontinuierlich verstellbarem Getriebe bekannt. Bei dem bekannten System wird unter Berücksichtigung des den Fahrerwunsch repräsentierenden Signals eine Solldrehzahl des Motors gebildet und das Getriebe derart angesteuert, dass sich die Eingangsdrehzahl der Solldrehzahl annähert, wobei das den Fahrerwunsch repräsentierende Signal ein relativer Fahrervortriebswunsch ist.

## Vorteile der Erfindung

Der relative Fahrervortriebswunsch kann auf den maximal verfügbaren Vortrieb bezogen sein. Beispielsweise kann die Skalierung des Signals in Prozent erfolgen, wobei ein relativer Fahrervortriebswunsch von 100% bedeutet, dass maximaler Vortrieb gewünscht ist und ein relativer Fahrervortriebswunsch von 0% bedeutet, dass minimaler Vortrieb gewünscht ist. Das Soll-Motordrehmoment wird auf der Grundlage des relativen Fahrervortriebswunsches bestimmt. Weiterhin wird eine Soll-Getriebeübersetzung auf der Grundlage des relativen Fahrervortriebswunsches berechnet. Die Sollgrößen können im Rahmen einer zentralen Applikation realisiert werden. Es ist möglich, den aktuellen Stellbereich des Motors bei der Umrechnung des Fahrervortriebswunsches in das gewünschte Motormoment zu berücksichtigen. Es kann somit eine zentrale Struktur zur Verfügung gestellt werden, durch die eine Kraftstoffreduzierung durch verbrauchsoptimale Motor- und Getriebesteuerung verwirklicht wird. Der relative Fahrervortriebswunsch kann ein relativer Fahrerleistungswunsch oder ein relativer Fahrerantriebsmomentenwunsch sein. Bei dem erfindungsgemäßen System nach Anspruch 1 und dem erfindungsgemässen Verfahren nach Anspruch 21 wird der relative Fahrervortriebswunsch dabei über eines von mehreren gespeichertes Kennfeld oder eines von mehreren vorgesehenen Berechnungsverfahren in Abhängigkeit von einer Wählhebelstellung ermittelt.

Eingangsgrößen eines Kennfeldes bei der Bestimmung des relativen Fahrervortriebswunsches sind beispielsweise die Fahrpedalstellung und die aktuelle Abtriebsdrehzahl beziehungsweise Fahrzeuggeschwindigkeit. Auf der Grundlage dieser Eingangsgrößen kann aus dem Kennfeld der relative Fahrervortriebswunsch ermittelt werden. Das Kennfeld berücksichtigt dabei beliebige Betriebsbedingungen. In diesem Zusammenhang ist es von besonderem Nutzen, dass mehrere Kennfelder vorgesehen sind und die Kennfelder in Abhängigkeit von der Wählhebelstellung verwendbar sind. Der Fahrer kann somit durch die Wählhebelstellung beeinflussen, in welcher Weise die Eingangsgrößen Fahrpedalstellung und Abtriebsdrehzahl in den relativen Fahrervortriebswunsch und somit letztlich in ein gewünschtes Motormoment und eine gewünschte Getriebeübersetzung umgesetzt werden.

Werden zur Ermittelung des relativen Fahrervortriebswunsches Berechnungsverfahren verwandt, so können diese beispielsweise unabhängig oder auch in Kombination mit gespeicherten Kennfeldern physikalische Gesetzmäßigkeiten ausnutzen, um die Eingangsgrößen in den relativen Fahrervortriebswunsch umzusetzen. Auch in diesem Zusammenhang ist es von besonderem Vorteil, dass mehrere Berechnungsverfahren zum Ermitteln des relativen Fahrervortriebswunsches vorgesehen, die in Abhängigkeit einer Wählhebelstellung verwendbar sind. Auch hier kann also wieder durch den Fahrer die Umsetzung der Eingangsgrößen in die Sollwerte durch Einstellung des Wählhebels beeinflusst werden.

In einer besonders bevorzugten Weiterbildung des erfindungsgemäßen Systems ist dieses dadurch vorteilhaft, dass zum Bestimmen des Soll-Motordrehmomentes unter Verwendung der aktuellen Geschwindigkeit der relative Fahrerleistungswunsch mit einer für konstante Geschwindigkeit erforderlichen Abtriebsleistung verglichen wird, unter Verwendung der Motordrehzahl die maximale Antriebsleistung ermittelt wird, unter Verwendung der Motordrehzahl die minimale Antriebsleistung ermittelt wird, unter Verwendung der Eingangsdrehzahl des Getriebes und der Motordrehzahl eine Referenzdrehzahl ermittelt wird, unter Verwendung der erforderlichen Abtriebsleistung für konstante Geschwindigkeit, der maximalen Antriebsleistung, der Referenzdrehzahl, einer Wandlerverstärkung und dem relativen Fahrerleistungswunsch ein Soll-Motordrehmomentsignal für eine Beschleunigung erzeugt wird, unter Verwendung der erforderlichen Abtriebsleistung für konstante Geschwindigkeit, der minimalen Antriebsleistung, der Referenzdrehzahl, einer Wandlerverstärkung und dem relativen Fahrerleistungswunsch ein Soll-Motordrehmomentsignal für eine Verzögerung erzeugt wird und durch das Vergleichsergebnis zwischen relativem Fahrerleistungswunsch und für konstante Geschwindigkeit erforderlicher Abtriebsleistung entschieden wird, ob das Soll-Drehmomentsignal für eine Beschleunigung oder das Soll-Drehmomentsignal für eine Verzögerung zum Bestimmen des Soll-Motordrehmomentes verwendet wird. Auf diese Weise können zahlreiche Eingangsgrößen bei der Bestimmung des Soll-Motormomentes berücksichtigt werden.

Ebenfalls kann im Rahmen des erfindungsgemäßen Systems vorgesehen sein, dass zum Bestimmen des Soll-Motordrehmomentes unter Verwendung der aktuellen Geschwindigkeit der relative Fahrerabtriebsmomentenwunsch mit einem für konstante Geschwindigkeit erforderlichen Abtriebsmoment verglichen wird, unter Verwendung der Motordrehzahl das maximale Antriebsmoment ermittelt wird, unter Verwendung der Motordrehzahl das minimale Abtriebsmoment ermittelt wird, unter Verwendung der Eingangsdrehzahl und der Abtriebsdrehzahl eine Drehmomentverstärkung ermittelt wird, unter Verwendung der erforderlichen Abtriebsmoments für konstante Geschwindigkeit, des maximalen Antriebsmoments, der Drehmomentverstärkung, einer Wandlerverstärkung und dem relativen Fahrerabtriebsmomentenwunsch ein Soll-Motordrehmomentsignal für eine Beschleunigung erzeugt wird, unter Verwendung des erforderlichen Abtriebsmoments für konstante Geschwindigkeit, des minimalen Antriebsmoments, der Drehmomentverstärkung, einer Wandlerverstärkung und dem relativen Fahrerabtriebsmomentenwunsch ein soll-Motordrehmomentsignal für eine Verzögerung erzeugt wird und durch das Vergleichsergebnis zwischen relativem Fahrerabtriebsmomentenwunsch und für konstante Geschwindigkeit erforderlichem Abtriebsmoment entschieden wird, ob das Soll-Drehmomentsignal für eine Beschleunigung oder das Soll-Drehmomentsignal für eine Verzögerung zum Bestimmen des Soll-Motordrehmomentes verwendet wird.

Das erfindungsgemäße System ist in besonders vorteilhafter Weise dadurch weitergebildet, dass zum Bestimmen der Soll-Getriebeübersetzung unter Berücksichtigung des relativen Fahrervortriebswunsches und von Betriebsbedingungen eine stationäre Solldrehzahl ermittelt wird, aus der stationären Solldrehzahl unter Berücksichtigung von Betriebsbedingungen eine dynamische Solldrehzahl ermittelt wird, aus der dynamischen Solldrehzahl unter Berücksichtigung von Betriebsbedingungen eine stationäre Sollübersetzung ermittelt wird und aus der stationären Sollübersetzung unter Berücksichtigung von Betriebsbedingungen die Soll-Getriebeübersetzung bestimmt wird. Als Betriebsbedingungen kommen beispielsweise eine Stellung des Wählhebels oder fahrerspezifische Kennzahlen in Frage. Somit lässt sich die Soll-Getriebeübersetzung in variabler Weise bestimmen, wobei als entscheidende Eingangsgröße erfindungsgemäß der relative Fahrervortriebswunsch verwendet wird.

In diesem Zusammenhang kann es sich als besonders vorteilhaft erweisen, dass bei der Bestimmung der Soll-Getriebeübersetzung durch Ermittlung einer Solldrehzahl die Übersetzung begrenzt wird. Eine solche Übersetzungsbegrenzung kann sinnvoll sein, wenn eine Hochschaltung beziehungsweise eine Rückschaltung des Getriebes über die vorgegebene Grenze erforderlich wäre. In diesen Fällen wird das Getriebe nur bis zur Übersetzungsgrenze verstellt.

Ebenfalls kann im Rahmen des erfindungsgemäßen Systems realisiert sein, dass beim Umschalten von einem Automatikbetrieb in einen manuellen Betrieb die Übersetzung beibehalten wird. Beim Umschalten in den manuellen Betrieb, den sogenannten Tip-Mode, wird die Übersetzung zunächst beibehalten, wobei der Übersetzung der Gang zugeordnet wird, welcher dem Schaltpunkt während des Automatikbetriebs am nächsten lag. Erst wenn eine Hochschaltung beziehungsweise eine Rückschaltung durch Betätigung des Wählhebels erfolgt, wird die Übersetzung entsprechend vorgegebener Kennlinien verändert. Auf diese Weise werden störende Zwangsschaltungen von einem Gang in den nächsten verhindert, so dass der Fahrkomfort erhöht wird.

Das erfindungsgemäße System kann dadurch weitergebildet sein, dass in einem manuellen Betrieb bei Erreichen einer Drehzahlschwelle die Soll-Getriebeübersetzung stufenlos verändert wird, so dass eine Drehzahlgrenze nicht überschritten beziehungsweise unterschritten wird.

Ebenfalls kann bei dem erfindungsgemäßen System vorgesehen sein, dass in einem manuellen Betrieb eine Ganginformation an die aktuell gewählte Getriebeübersetzung angepasst wird.

Bei dem erfindungsgemäßen System kann in vorteilhafter Weise vorgesehen sein, dass die Bestimmung der Sollgetriebeübersetzung mindestens ein Verwalterobjekt und mehrere Lieferobjekte im Sinne einer objektorientierten Struktur beinhaltet.

Ferner kann bei dem erfindungsgemäßen System bevorzugt vorgesehen sein, dass das Verwalterobjekt die Lieferobjekte abfragt, ob sie Informationen zur Bestimmung der Sollgetriebeübersetzung liefern wollen.

Weiterhin kann bei dem erfindungsgemäßen System vorzugsweise vorgesehen sein, dass die Abfrage der Lieferobjekte priorisiert erfolgt.

Des weiteren kann bei dem erfindungsgemäßen System in vorteilhafter Weise vorgesehen sein, dass die Lieferobjekte eine Solldrehzahl und/oder eine Sollübersetzung liefern können.

Ferner kann bei dem erfindungsgemäßen System bevorzugt vorgesehen sein, dass die Lieferobjekte eine weitere Information liefern können, die angibt, wie die Sollübersetzung die Solldrehzahlvorgabe begrenzen soll.

Des weiteren kann bei dem erfindungsgemäßen System vorzugsweise vorgesehen sein, dass die Lieferobjekte weitere Informationen zur Beeinflussung der Dynamik der Drehzahlvorgabe liefern können.

Weiterhin kann bei dem erfindungsgemäßen System in vorteilhafter Weise vorgesehen sein, dass die Informationen zur Beeinflussung der Dynamik der Drehzahlvorgabe Filterkonstanten sind.

Weiterhin kann bei dem erfindungsgemäßen System in vorteilhafter Weise vorgesehen sein, dass die Informationen zur Beeinflussung der Dynamik der Drehzahlvorgabe minimale und/oder maximale Drehzahlgradienten sind.

Ferner kann bei dem erfindungsgemäßen System bevorzugt vorgesehen sein, dass die Informationen zur Beeinflussung der Dynamik der Übersetzungsvorgabe Filterkonstanten sind.

Des Weiteren kann das System so fortgebildet sein, dass die Informationen zur Beeinflussung der Dynamik der Übersetzungsvorgabe minimale und/oder maximale Übersetzungsgradienten sind.

Es kann im Rahmen des erfindungsgemäßen Verfahrens vorgesehen sein, dass der relative Fahrervortriebswunsch ein relativer Fahrerleistungswunsch ist.

In einer weiteren Ausführungsform des erfindungsgemäßen Verfahrens ist vorgesehen, dass der relative Fahrervortriebswunsch ein relativer Fahrerantriebsmomentenwunsch ist.

Es ist besonders bevorzugt, dass der relative Fahrervortriebswunsch über mindestens ein gespeichertes Kennfeld ermittelt wird. Ebenfalls kann es nützlich sein, dass der relative Fahrervortriebswunsch über Berechnungsverfahren ermittelt wird.

Auch in diesem Zusammenhang ist es von besonderem Vorteil, dass mehrere Berechnungsverfahren zum Ermitteln des relativen Fahrervortriebswunsches vorgesehen sind und dass die Berechnungsverfahren in Abhängigkeit einer Wählhebelstellung verwendet werden.

In einer besonders bevorzugten Weiterbildung des erfindungsgemäßen Verfahrens ist dieses dadurch vorteilhaft, dass zum Bestimmen des Soll-Motordrehmomentes unter Verwendung der aktuellen Geschwindigkeit der relative Fahrerleistungswunsch mit einer für konstante Geschwindigkeit erforderlichen Abtriebsleistung verglichen wird, unter Verwendung der Motordrehzahl die maximale Antriebsleistung ermittelt wird, unter Verwendung der Motordrehzahl die minimale Antriebsleistung ermittelt wird, unter Verwendung der Eingangsdrehzahl des Getriebes und der Motordrehzahl eine Referenzdrehzahl ermittelt wird, unter Verwendung der erforderlichen Abtriebsleistung für konstante Geschwindigkeit, der maximalen Antriebsleistung, der Referenzdrehzahl, einer Wandlerverstärkung und dem relativen Fahrerleistungswunsch ein Soll-Motordrehmomentsignal für eine Beschleunigung erzeugt wird, unter Verwendung der erforderlichen Abtriebsleistung für konstante Geschwindigkeit, der minimalen Antriebsleistung, der Referenzdrehzahl, einer Wandlerverstärkung und dem relativen Fahrerleistungswunsch ein Soll-Motordrehmomentsignal für eine Verzögerung erzeugt wird und durch das Vergleichsergebnis zwischen relativem Fahrerleistungswunsch und für konstante Geschwindigkeit erforderlicher Abtriebsleistung entschieden wird, ob das Soll-Drehmomentsignal für eine Beschleunigung oder das Soll-Drehmomentsignal für eine Verzögerung zum Bestimmen des Soll-Motordrehmomentes verwendet wird.

Ebenfalls kann im Rahmen des erfindungsgemäßen Verfahrens vorgesehen sein, dass zum Bestimmen des Soll-Motordrehmomentes unter Verwendung der aktuellen Geschwindigkeit der relative Fahrerabtriebsmomentenwunsch mit einem für konstante Geschwindigkeit erforderlichen Abtriebsmoment verglichen wird, unter Verwendung der Motordrehzahl das maximale Antriebsmoment ermittelt wird, unter Verwendung der Motordrehzahl das minimale Abtriebsmoment ermittelt wird, unter Verwendung der Eingangsdrehzahl und der Abtriebsdrehzahl eine Drehmomentverstärkung ermittelt wird, unter Verwendung der erforderlichen Abtriebsmoments für konstante Geschwindigkeit, des maximalen Antriebsmoments, der Drehmomentverstärkung, einer Wandlerverstärkung und dem relativen Fahrerabtriebsmomentenwunsch ein Soll-Motordrehmomentsignal für eine Beschleunigung erzeugt wird, unter Verwendung des erforderlichen Abtriebsmoments für konstante Geschwindigkeit, des minimalen Antriebsmoments, der Drehmomentverstärkung, einer Wandlerverstärkung und dem relativen Fahrerabtriebsmomentenwunsch ein Soll-Motordrehmomentsignal für eine Verzögerung erzeugt wird und durch das Vergleichsergebnis zwischen relativem Fahrerabtriebsmomentenwunsch und für konstante Geschwindigkeit erforderlichem Abtriebsmoment entschieden wird, ob das Soll-Drehmomentsignal für eine Beschleunigung oder das Soll-Drehmomentsignal für eine Verzögerung zum Bestimmen des Soll-Motordrehmomentes verwendet wird.

Das erfindungsgemäße Verfahren ist in besonders vorteilhafter Weise dadurch weitergebildet, dass zum Bestimmen der Soll-Getriebeübersetzung unter Berücksichtigung des relativen Fahrervortriebswunsches und von Betriebsbedingungen eine stationäre Solldrehzahl ermittelt wird, aus der stationären Solldrehzahl unter Berücksichtigung von Betriebsbedingungen eine dynamische Solldrehzahl ermittelt wird, aus der dynamischen Solldrehzahl unter Berücksichtigung von Betriebsbedingungen eine stationäre Sollübersetzung ermittelt wird und aus der stationären Sollübersetzung unter Berücksichtigung von Betriebsbedingungen die Soll-Getriebeübersetzung bestimmt wird.

In diesem Zusammenhang kann es sich als besonders vorteilhaft erweisen, dass bei der Bestimmung der Soll-Getriebeübersetzung durch Ermittlung einer Solldrehzahl die Übersetzung begrenzt wird.

Ebenfalls kann im Rahmen des erfindungsgemäßen Verfahrens realisiert sein, dass beim Umschalten von einem Automatikbetrieb in einen manuellen Betrieb die Übersetzung beibehalten wird.

Das erfindungsgemäße Verfahren kann dadurch weitergebildet sein, dass in einem manuellen Betrieb bei Erreichen einer Drehzahlschwelle die Soll-Getriebeübersetzung stufenlos verändert wird, so dass eine Drehzahlgrenze nicht überschritten beziehungsweise unterschritten wird.

Ebenfalls kann bei dem erfindungsgemäßen Verfahren vorgesehen sein, dass in einem manuellen Betrieb eine Ganginformation an die aktuell gewählte Getriebeübersetzung angepasst wird.

Bei dem erfindungsgemäßen Verfahren kann bevorzugt vorgesehen sein, dass die Bestimmung der Sollgetriebeübersetzung mindestens ein Verwalterobjekt und mehrere Lieferobjekte im Sinne einer objektorientierten Struktur beinhaltet.

Ferner kann bei dem erfindungsgemäßen Verfahren vorzugsweise vorgesehen sein, dass das Verwalterobjekt die Lieferobjekte abfragt, ob sie Informationen zur Bestimmung der Sollgetriebeübersetzung liefern wollen.

Weiterhin kann bei dem erfindungsgemäßen Verfahren in vorteilhafter Weise vorgesehen sein, dass die Abfrage der Lieferobjekte priorisiert erfolgt.

Des weiteren kann bei dem erfindungsgemäßen Verfahren bevorzugt vorgesehen sein, dass die Lieferobjekte eine Solldrehzahl und/oder eine Sollübersetzung liefern können.

Ferner kann bei dem erfindungsgemäßen Verfahren vorzugsweise vorgesehen sein, dass die Lieferobjekte eine weitere Information liefern können, die angibt, wie die Sollübersetzung die Solldrehzahlvorgabe begrenzen soll.

Des Weiteren kann bei dem erfindungsgemäßen Verfahren in vorteilhafter Weise vorgesehen sein, dass die Lieferobjekte weitere Informationen zur Beeinflussung der Dynamik der Drehzahlvorgabe liefern können.

Weiterhin kann bei dem erfindungsgemäßen Verfahren in vorteilhafter Weise vorgesehen sein, dass die Informationen zur Beeinflussung der Dynamik der Drehzahlvorgabe Filterkonstanten sind.

Weiterhin kann bei dem erfindungsgemäßen Verfahren in vorteilhafter Weise vorgesehen sein, dass die Informationen zur Beeinflussung der Dynamik der Drehzahlvorgabe minimale und/oder maximale Drehzahlgradienten sind.

Ferner kann bei dem erfindungsgemäßen Verfahren in vorteilhafter Weise vorgesehen sein, dass die Informationen zur Beeinflussung der Dynamik der Übersetzungsvorgabe Filterkonstanten sind.

Des weiteren kann bei dem erfindungsgemäßen Verfahren in vorteilhafter Weise vorgesehen sein, dass die Informationen zur Beeinflussung der Dynamik der Übersetzungsvorgabe minimale und/oder maximale Übersetzungsgradienten sind.

Der Erfindung liegt die Erkenntnis zugrunde, dass es möglich ist, auf der Grundlage eines relativen Fahrervortriebswunsches in Form einer zentralen Applikation das Soll-Motordrehmoment und die Soll-Getriebeübersetzung zu ermitteln. Es ist möglich, den aktuellen Stellbereich des Motors bei der Umrechnung des relativen Vortriebswunsches in das gewünschte Motormoment zu berücksichtigen. Letztlich kann der Kraftstoffverbrauch reduziert werden, indem eine verbrauchsoptimierte Motor- und Getriebesteuerung vorliegt. Die Erfindung lässt sich durch Verwendung einer flexiblen Softwarestruktur zur Realisierung von übersetzungsbasierenden und drehzahlbasierenden Fahrfunktionen verwirklichen. In bevorzugten Ausführungsformen kann ein manuelles Schalten des Getriebes im sogenannten Tip-Mode ohne störende Zwangsschaltungen von einem Gang in den nächsten erfolgen. Die Erfindung lässt sich unter Weiterverwendung von bestehenden Fahrprogrammstrukturen für ein Triebstrangmanagement durch Wahl eines prozentualen Fahrervortriebswunsches implementieren. Ferner ist in vorteilhaften Ausführungsformen vorgesehen, dass Sprünge bei der Sollübersetzungsvorgabe durch Berechnung einer gefilterten Referenzdrehzahl vermieden werden können. Die Vermeidung von unerwünschten dynamischen Effekten bei der Umrechnung der Solldrehzahl in die Sollübersetzung kann durch Wahl von Filterparametern erfolgen, die an die Fahrsituation, beispielsweise Beschleunigung oder Verzögerung, angepasst werden.

**Zeichnungen.**

Die Erfindung wird nun mit Bezug auf die begleitenden Zeichnungen anhand bevorzugter Ausführungsformen beispielhaft erläutert.

Dabei zeigt:

Figur 1    eine Übersicht über eine Anordnung, in deren Rahmen die vorliegende Erfindung realisierbar ist;

Figur 2    ein Blockdiagramm zur Erläuterung einer grundlegenden Struktur der Erfindung;

Figur 3    ein Blockdiagramm zur Erläuterung einer weiteren grundlegenden Struktur der Erfindung;

Figur 4    ein Blockdiagramm zur Erläuterung eines Berechnungsablaufes zur Bildung eines Soll-Motormomentes;

Figur 5    ein Blockdiagramm zur Erläuterung eines weiteren Berechnungsablaufes zur Bildung eines Soll-Motormomentes;

Figur 6    ein Diagramm mit verschiedenen Signalverläufen in Abhängigkeit der Zeit;

Figur 7    ein Blockdiagramm zur Erläuterung der Berechnung einer Sollübersetzung;

Figur 8    ein Blockdiagramm zur Bestimmung einer Solldrehzahl in Abhängigkeit bestimmter Betriebsbedingungen;

Figur 9    ein Diagramm (Variogramm) mit möglichen Übersetzungsverläufen, wobei eine Drehzahl gegen die Fahrzeuggeschwindigkeit aufgetragen ist;

Figur 10    ein Blockdiagramm zur Erläuterung der Bestimmung von Referenzdrehzahlsignalen;

Figur 11    ein Blockdiagramm zur Erläuterung der Bestimmung einer Referenzgeschwindigkeit;

Figur 12    eine schematische Darstellung einer objektorientierten Steuerungsstruktur entsprechend dem in Figur 7 gezeigten Blockdiagramm;

Figur 13    ein Flussdiagramm zur Erläuterung einer Begrenzungsinformationsabfrage; und

Figur 14    ein Flussdiagramm zur Erläuterung einer weiteren Begrenzungsinformationsabfrage.

**Beschreibung der Ausführungsbeispiele**

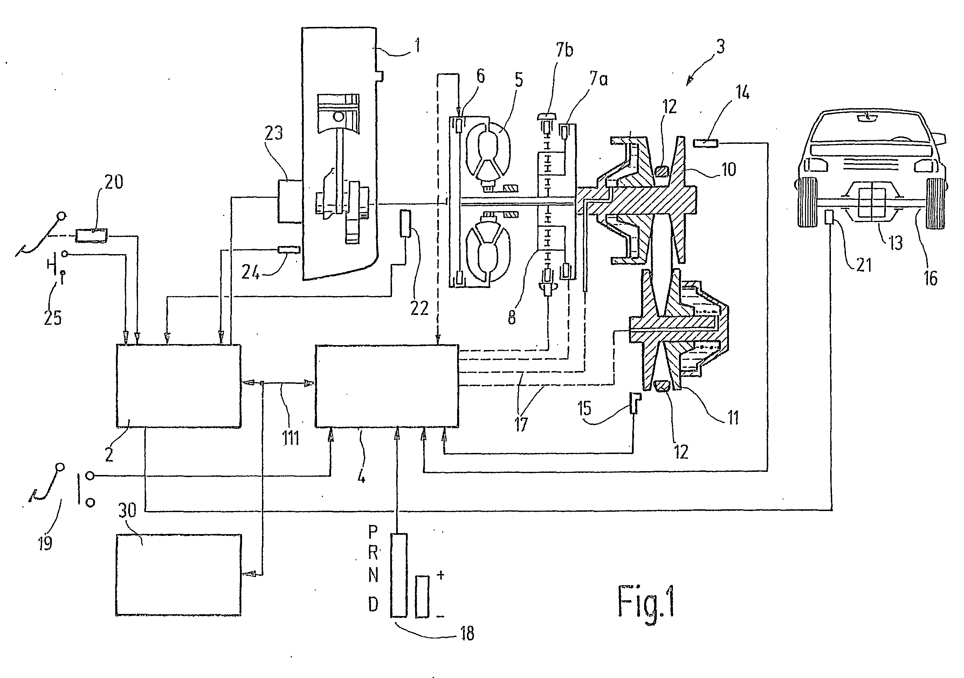

Figur 1 zeigt eine Übersicht über eine Anordnung, in deren Rahmen die vorliegende Erfindung realisierbar ist. Das stufenlose Getriebe 3 ist mit einem Verbrennungsmotor 1 gekoppelt. Der Verbrennungsmotor 1 wird durch Stellglieder 23 gesteuert. Diese Stellglieder können zum Beispiel eine elektronische Drosselklappenverstelleinrichtung, Einspritzventile oder eine elektronische Zündvorrichtung sein.

Die Motorsteuerung 2 erfasst mittels Sensoren, mindestens einem Motordrehzahlsensor 22, einem Abtriebsdrehzahlsensor 21 und einem Motortemperatursensor 24, den Betriebszustand des Verbrennungsmotors und stellt ein gewünschtes Motordrehmoment durch Ansteuerung der Stellglieder 23 ein. Ein Gaspedalsensor 20 erfasst die Stellung des Gaspedals. Ein Kick-down-Sensor 25 erfasst die Information, dass das Gaspedal vollständig getreten ist.

Das Getriebe 3 besteht aus den bekannten Komponenten: optional Wandler 5 mit Überbrückungskupplung 6, Planetensatz 8 mit Vorwärtskupplung 7a und Rückwärtskupplung 7b, der Primärscheibe 10, der Sekundärscheibe 11, einem Schubgliederband 12 und einem nachgeschalteten Ausgleichsgetriebe 13. Das Getriebe ist an die Antriebswellen 16 gekoppelt.

Die elektronische Getriebesteuerung 4 ist zum Beispiel mit einem Sensor 14 zur Messung der Primärdrehzahl, einem Sensor 15 zur Messung der Sekundärdrehzahl, einem Sensor 18 zur Erfassung einer Wählhebelstellung (P, R, N, D, Manuell, +, -) und einem Sensor 19 zur Erkennung, ob das Bremspedal getreten ist, ausgestattet. Alternativ können andere Sensoren vorhanden sein, mit denen die Übersetzung des Variators gemessen wird, statt die Übersetzung aus der Primär- und Sekundärdrehzahl abzuleiten. Dabei kann es sich zum Beispiel um einen Sensor zur Messung der axialen Verschiebung der primären beweglichen Kegelscheibe handeln.

Die elektronische Getriebesteuerung 4 besitzt Mittel 17 zur Einstellung einer gewünschten Übersetzung des Variators.

Die Motor- und Getriebesteuerung 2, 4 sind über einen CAN-Bus 111 vernetzt. Über den CAN-Bus 111 können Sensorsignale und weitere Signale zwischen der Motorsteuerung 2 und der Getriebesteuerung 4 ausgetauscht werden.

Die Sensorsignale können eventuell von anderen nicht dargestellten elektronischen Steuergeräten erfasst und per CAN-Bus an die Motor- beziehungsweise Getriebesteuerung übertragen werden.

Insbesondere kann ein weiteres Steuergerät 30 (zum Beispiel ABS, ASR, ESP) vorhanden sein, das Signale über CAN mit der Motor- und der Getriebesteuerung austauscht, zum Beispiel ein Fahrgeschwindigkeitssignal, ein Querbeschleunigungssignal, ein Längsbeschleunigungssignal und Statussignale, die angeben, dass die Funktionen ABS, ASR oder ESP aktiv sind.

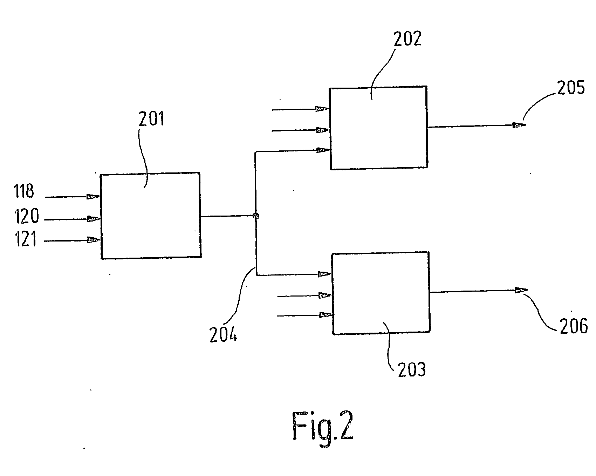

Figur 2 zeigt ein Blockdiagramm zur Erläuterung der grundlegenden Struktur der Erfindung. Ein Funktionsblock 201 enthält eine Bewertung des Fahrerleistungswunsches. Dazu wird aus der Fahrpedalstellung 120 und der Abtriebsdrehzahl (beziehungsweise Fahrzeuggeschwindigkeit) 121 ein relativer Fahrerleistungswunsch 204 mittels Kennfeld oder Berechnungsblöcken gebildet. Der Fahrerleistungswunsch 204 berücksichtigt die Wählhebelstellung 118. Für einzelne Wählhebelstellungen, zum Beispiel Stellung Rückwärts, oder alle Wählhebelstellungen gibt es gesonderte Berechnungsverfahren zur Bildung des relativen Fahrerleistungswunsches 204.

Der relative Leistungswunsch ist auf die maximal verfügbare Abtriebsleistung bezogen. Die Skalierung des Signals 204 kann zum Beispiel in Prozent erfolgen. 100% bedeutet maximale Abtriebsleistung, 0% bedeutet minimale Abtriebsleistung.

Das Signal relative Fahrerwunschleistung kann beim Einsatz einer Fahrgeschwindigkeitsregelung auch direkt von der Fahrgeschwindigkeitsregelung zur verfügung gestellt werden.

Der Block 202 enthält einen Berechnungsalgorithmus zur Bildung eines gewünschten Motormomentes 205 aus dem relativen Fahrerleistungswunsch 204.

Der Block 203 enthält einen Berechnungsalgorithmus zur Bildung einer gewünschten Getriebeübersetzung 206 aus dem relativen Fahrerleistungswunsch 204.

Der Block 203 wird in der Regel im Getriebesteuergerät implementiert. Die Blöcke 201 und 202 werden in der Regel im Motorsteuergerät implementiert.

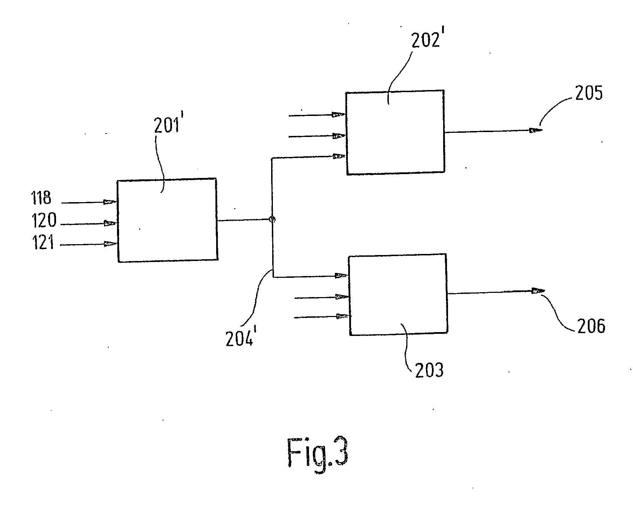

Figur 3 zeigt ein Blockdiagramm zur Erläuterung einer weiteren grundlegenden Struktur der Erfindung. Anstelle eines relativen Fahrerleistungswunsches 204 kann ein relativer Fahrerabtriebsmomentenwunsch 204' von dem Funktionsblock 201' bereitgestellt werden. Der relative Fahrerabtriebsmomentenwunsch 204' ist auf das maximal verfügbare Abtriebsmoment bezogen. Der Block 202' muss in diesem Fall anders ausgeführt werden. Der Block 203 ist von dieser Änderung nicht berührt.

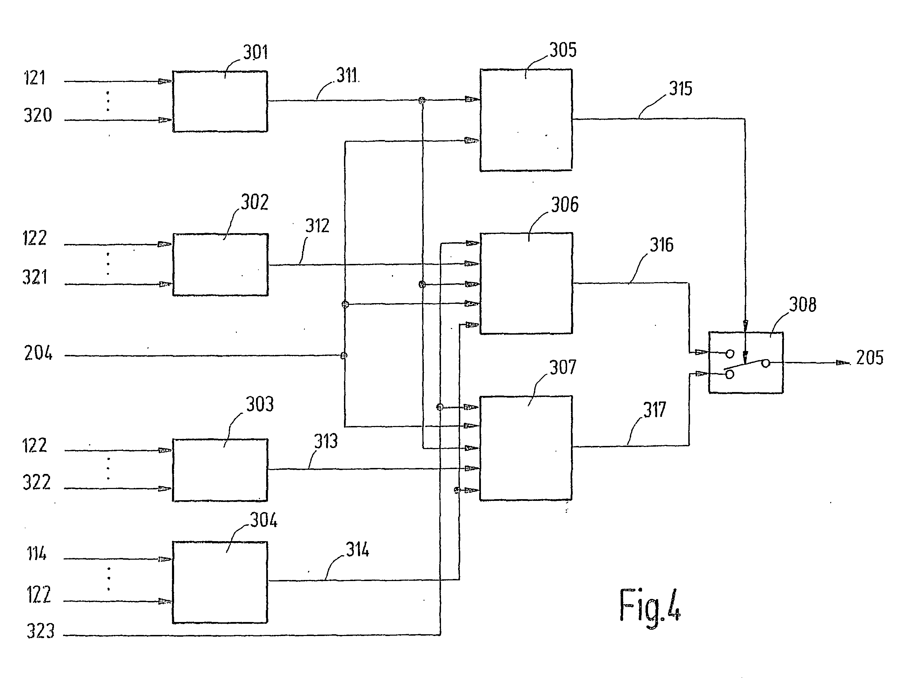

Figur 4 zeigt ein Blockdiagramm zur Erläuterung eines Berechnungsablaufes zur Bildung eines Soll-Motormomentes. Der Block 301 berechnet eine erforderliche Abtriebsleistung 311, bei der das Fahrzeug mit konstanter Geschwindigkeit fährt. Dazu wird mindestens die Abtriebsdrehzahl beziehungsweise Fahrzeuggeschwindigkeit 121 verwendet. Es können jedoch auch weitere Größen 320, zum Beispiel betreffend den Getriebewirkungsgrad, die Steigung oder die Beladung des Fahrzeugs, verwendet werden.

Der Block 302 berechnet eine maximal verfügbare Antriebsleistung 312, die der Antrieb des Fahrzeugs zur Verfügung stellt. Für diese Berechnung können, zum Beispiel die Motordrehzahl 122 und weitere Signale 321, zum Beispiel über die verfügbaren Motorbetriebszustände, verwendet werden.

Der Block 303 berechnet eine minimal verfügbare Antriebsleistung 313, die der Antrieb des Fahrzeugs ermöglicht. In diese Berechnung gehen die Motordrehzahl 122 und weitere Signale 322 ein, welche Betriebszustände des Motors charakterisieren, zum Beispiel ein Signal, ob eine Abschaltung der Einspritzung im Schubbetrieb erlaubt ist.

Der Block 304 berechnet eine Referenzdrehzahl 314 aus der Eingangsdrehzahl des Getriebes 114 und/oder der Motordrehzahl 122. Die Referenzdrehzahl 314 ist bei der Verwendung eines Drehmomentwandlers im Wesentlichen gleich der Turbinendrehzahl des Wandlers. Die Referenzdrehzahl 314 wird auf eine minimale Drehzahlgrenze begrenzt.

Der Block 305 enthält eine Logik zur Entscheidung, ob der relative Leistungswunsch 204 so groß ist, dass das Fahrzeug im Wesentlichen beschleunigt werden soll (im Folgenden Beschleunigungsbetrieb genannt) oder im Wesentlichen verzögert werden soll (im Folgenden Verzögerungsbetrieb genannt). Zu diesem Zweck wird der relative Leistungswunsch 204 mit der Konstantfahrtleistung 311 verglichen. Ist der Leistungswunsch 204 größer als die Konstantfahrtleistung 311, dann will der Fahrer das Fahrzeug im Wesentlichen beschleunigen. Andernfalls soll die Fahrzeuggeschwindigkeit im Wesentlichen verringert werden. Als Ergebnis wird das Signal 315 geliefert.

Der Block 306 berechnet ein Soll-Motormomentsignal 316 für den Betriebsmodus Beschleunigungsbetrieb.

Dazu enthält der Block 306 einen Berechnungsblock, mit dem als Funktion des relativen Leistungswunsches 204 zwischen der Konstantfahrtleistung 311 und der maximal verfügbaren Antriebsleistung 312 interpoliert wird. Das Ergebnis der Interpolation wird durch die Referenzdrehzahl 314 und die Wandlerverstärkung 323 geteilt. Das Ergebnis ist das Signal 316. Die Wandlerverstärkung 323 kann zum Beispiel aus den Drehzahlsignalen 122 und 114 berechnet werden.

Der Block 307 berechnet ein Soll-Motormomentsignal 317 für den Betriebsmodus Verzögerungsbetrieb. Dazu enthält der Block 307 einen Berechnungsblock, mit dem als Funktion des relativen Leistungswunsches 204 zwischen der minimalen Antriebsleistung 313 und der Konstantfahrtleistung 311 interpoliert wird. Das Ergebnis der Interpolation wird durch die Referenzdrehzahl 314 und die Wandlerverstärkung 323 geteilt. Das Ergebnis ist das Signal 317.

Mit dem Signal 315 schaltet der Schalterblock 308 zwischen den Ausgangssignalen 316 und 317 der Blöcke 306 und 307 um und liefert als Resultat das Soll-Motormoment 205.

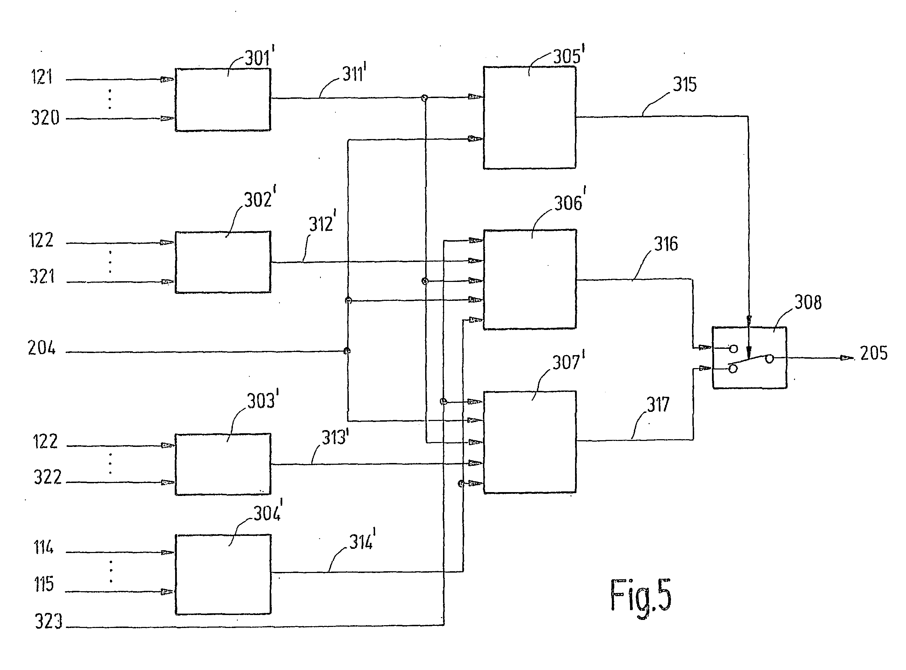

Figur 5 zeigt ein Blockdiagramm zur Erläuterung eines weiteren Berechnungsablaufes zur Bildung eines Soll-Motormomentes. Es ist ein Algorithmus zur Berechnung des Sollmotormoments 205 aus dem relativen Fahrerabtriebsmomentenwunsch 204' dargestellt.

Der Block 301' berechnet ein erforderliches Abtriebsmoment 311', bei dem das Fahrzeug mit konstanter Geschwindigkeit fährt. Dazu wird mindestens die Abtriebsdrehzahl beziehungsweise Fahrzeuggeschwindigkeit 121 verwendet. Es können jedoch auch weitere Größen 320, zum Beispiel über den Getriebewirkungsgrad, die Steigung oder die Beladung des Fahrzeugs verwendet werden.

Der Block 302' berechnet ein maximal verfügbares Abtriebsmoment 312', das der Antrieb des Fahrzeugs zur Verfügung stellt. Für diese Berechnung kann zum Beispiel die Motordrehzahl 122 und weitere Signale 321, zum Beispiel über die verfügbaren Motorbetriebszustände, verwendet werden.

Der Block 303' berechnet ein minimal verfügbares Abtriebsmoment 313', das der Antrieb des Fahrzeugs ermöglicht. In diese Berechnung gehen die Motordrehzahl 122 und weitere Signale 322 ein, welche Betriebszustände des Motors charakterisieren. Dabei kann es sich zum Beispiel um ein Signal handeln, das angibt, ob eine Abschaltung der Einspritzung im Schubbetrieb erlaubt ist.

Der Block 304' berechnet eine Drehmomentverstärkung 314' des Getriebes, zum Beispiel durch Auswertung der Eingangsdrehzahl 114 und der Sekundärdrehzahl (Abtriebsdrehzahl) 115.

Der Block 305' enthält eine Logik zur Entscheidung, ob der relative Abtriebsmomentwunsch 204' so groß ist, dass das Fahrzeug im wesentlichen beschleunigt werden soll (im folgenden Beschleunigungsbetrieb genannt) oder im wesentlichen verzögert werden soll (im folgenden Verzögerungsbetrieb genannt). Zu diesem Zweck wird der relative Abtriebsmomentenwunsch 204' mit dem Konstantfahrabtriebsmoment 311' verglichen. Ist der Abtriebsmomentenwunsch größer als das Konstantfahrabtriebsmoment, dann will der Fahrer das Fahrzeug im wesentlichen beschleunigen. Andernfalls soll die Fahrzeuggeschwindigkeit im wesentlichen verringert werden. Als Ergebnis wird das Signal 315 geliefert.

Der Block 306' berechnet ein Sollmotormomentsignal 316 für den Betriebsmodus Beschleunigungsbetrieb. Dazu enthält der Block 306' einen Berechnungsblock, mit dem als Funktion des relativen Abtriebsmomentenwunsches 204' zwischen dem Konstantfahrabtriebsmoment 311' und dem maximal verfügbaren Abtriebsmoment 312' interpoliert wird. Das Ergebnis der Interpolation wird durch die Drehmomentverstärkung 314' und die Wandlerverstärkung 323 geteilt. Das Ergebnis ist das Signal 316.

Die Wandlerverstärkung 323 kann zum Beispiel aus den Drehzahlsignalen 122 und 114 berechnet werden.

Der Block 307' berechnet ein Sollmotormomentsignal 317 für den Betriebsmodus Verzögerungsbetrieb. Dazu enthält der Block 307' einen Berechnungsblock, mit dem als Funktion des relativen Abtriebsmomentenwunsches 204' zwischen dem minimalen Abtriebsmoment 313' und Konstantfahrtmoment 311' interpoliert wird. Das Ergebnis der Interpolation wird durch die Drehmomentverstärkung 314' und die Wandlerverstärkung 323 geteilt. Das Ergebnis ist das Signal 317.

Mit dem Signal 315 schaltet der Schalterblock 308 zwischen den Ausgangssignalen 316 und 317 der Blöcke 306 und 307 um und liefert als Resultat das Sollmotormoment 205.

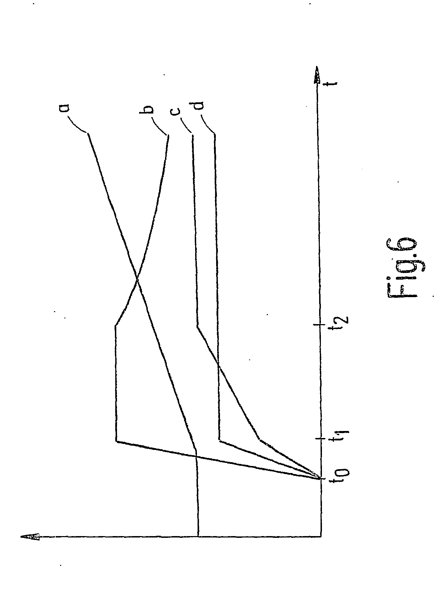

Figur 6 zeigt ein Diagramm mit verschiedenen Signalverläufen in Abhängigkeit der Zeit. Es sind Signale eines Anfahrvorgangs mit kleiner bis mittlerer Fahrpedalstellung dargestellt, die ein vorteilhaftes Anfahrverhalten versprechen. Dieses Signalverhalten kann mit der im Zusammenhang mit Figur 4 erläuterten Berechnungsmethode realisiert werden.

Dabei steht die Kurve a für die Motordrehzahl, die Kurve b für das Motordrehmoment, die Kurve c für die Abtriebsleistung und die Kurve d für die Fahrpedalstellung.

Vom Zeitpunkt t0 bis zum Zeitpunkt t1 tritt der Fahrer das Fahrpedal durch. Anschließend fährt der Fahrer mit konstantem Fahrpedal weiter. Bis zum Zeitpunkt t1 wird das Motordrehmoment größer. Vom Zeitpunkt t1 bis zum Zeitpunkt t2 bleibt das Motormoment im Wesentlichen konstant. Durch die Zunahme der Motordrehzahl erhöht sich jedoch die Antriebsleistung und damit zwangsläufig die Abtriebsleistung im Wesentlichen proportional zur Motordrehzahl. Ab dem Zeitpunkt t2 hat die Abtriebsleistung den Wert erreicht, der dem relativen Leistungswunsch des Fahrers entspricht. Nun wird das gewünschte Motordrehmoment mit zunehmender Motordrehzahl reduziert, damit die gewünschte Abtriebsleistung nicht überschritten wird. Die Figur 6 zeigt, dass es beim Anfahren des Fahrzeugs vorteilhaft ist, das gewünschte Motordrehmoment solange proportional zum Leistungswunsch zu erhöhen, bis die gewünschte Abtriebsleistung erreicht ist.

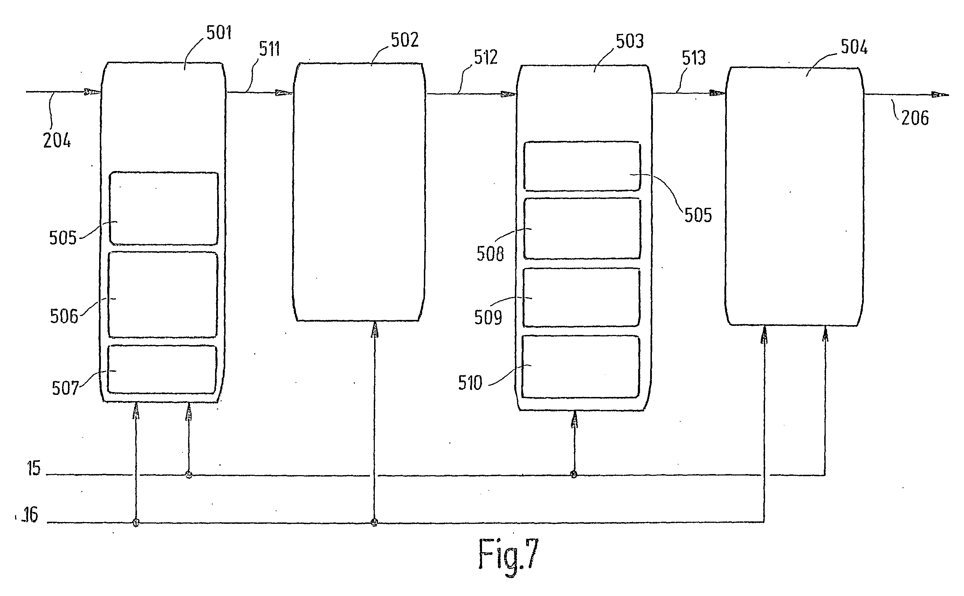

Figur 7 zeigt ein Blockdiagramm zur Erläuterung der Berechnung einer Sollübersetzung. Der Berechnungsblock 501 liefert ein Soll-Drehzahlsignal 511, das als stationäre Solldrehzahl bezeichnet wird. Der Block 502 enthält Berechnungsvorschriften zur dynamischen Beeinflussung des Soll-Drehzahlsignals 512. Stationär sind die Drehzahlsignale 511 und 512 im Wesentlichen gleich. Der Block 503 enthält einen Berechnungsblock zur Bereitstellung einer stationären Sollübersetzung 513. Der Block 504 enthält Berechnungsvorschriften zur dynamischen Beeinflussung der Sollübersetzung 206.

Wie aus dem Stand der Technik bekannt ist, wird eine/mehrere Kennzahl (en) 516 zur Bewertung des Fahrertyps mit einer Fahrertyperhennung (nicht dargestellt) ermittelt. Ein Statussignal 515 liefert eine Aussage über die Fahrsituation. Dahinter verbirgt sich zum Beispiel die Erkennung, ob vorwärts/rückwärts gefahren wird oder ob bergab gefahren wird usw.

Wesentlich für die Bereitstellung der Sollübersetzung ist, dass es Betriebsbedingungen gibt, in denen es vorteilhaft ist eine Sollübersetzung vorzugeben und dass es Betriebsbedingungen gibt, in denen es vorteilhaft ist eine Solldrehzahl vorzugeben. So ist es bevorzugt, bei Rückwärtsfahrt 508, bei Fast-off 510 und im manuellen Tip-Mode 509 eher eine konstante Übersetzung vorzugeben. Dagegen ist es andererseits bevorzugt, bei normaler Vorwärtsfahrt 505, beim Warmlauf und bei der Schutzfunktion Overheat 506 eine Solldrehzahl vorzugeben. Weiterhin kann es vorteilhaft sein, bei Bergabfahrt 507 eine Solldrehzahl vorzugeben.

Den verschiedenen Betriebsbedingungen (rückwärts, manuell ...) können im Sinne einer objektorientierten Softwaregestaltung Lieferobjekte zugeordnet werden. Diese Lieferobjekte werden von einer Verwaltungssoftware aufgefordert, Solldrehzahlen, Sollübersetzungen und Parameter für die Beeinflussung der Dynamik in den Blöcken 502 und 504 zu liefern. Der Verwalter wertet die zurückgegebenen Größen aus und veranlasst die Berechnung der Signale 511, 512, 513 und 206. Die Lieferobjekte können durch diese Struktur flexibel an die gewünschte Funktionalität angepasst werden.

Der Block 503 rechnet bei Vorgabe einer Solldrehzahl 512 diese Solldrehzahl in eine Getriebesollübersetzung um bei Verwendung der Abtriebsreferenzdrehzahl $n_{ab,ref}$:

$$i = \frac{n_{soll,512}}{n_{ab,ref}} \qquad (1)$$

oder er rechnet die Solldrehzahl 512 in eine Variatorsollübersetzung um bei Verwendung der Sekundärreferenzdrehzahl $n_{sec,ref}$:

$$i = \frac{n_{soll,512}}{n_{sec,ref}} \qquad (2)$$

Für eine Betriebssituation (Economy/Sport) kann es vorteilhaft sein, dass neben der Drehzahl eine Übersetzung im Sinne einer Übersetzungsgrenze vorgegeben wird. Diese Übersetzungsgrenze wird nur wirksam, wenn die Übersetzungsberechnung aus dem Signal 512 ergibt, dass eine Hoch- beziehungsweise Rückschaltung des Getriebes über diese Grenze hinaus erforderlich wäre. In diesen Fällen wird das Getriebe nur bis zu dieser Übersetzungsgrenze verstellt. In allen anderen Fällen wird die Übersetzung jedoch nicht in Richtung der Übersetzungsgrenze verstellt, ohne dass die Übersetzungsberechnung aus der Drehzahl 512 dies erfordert.

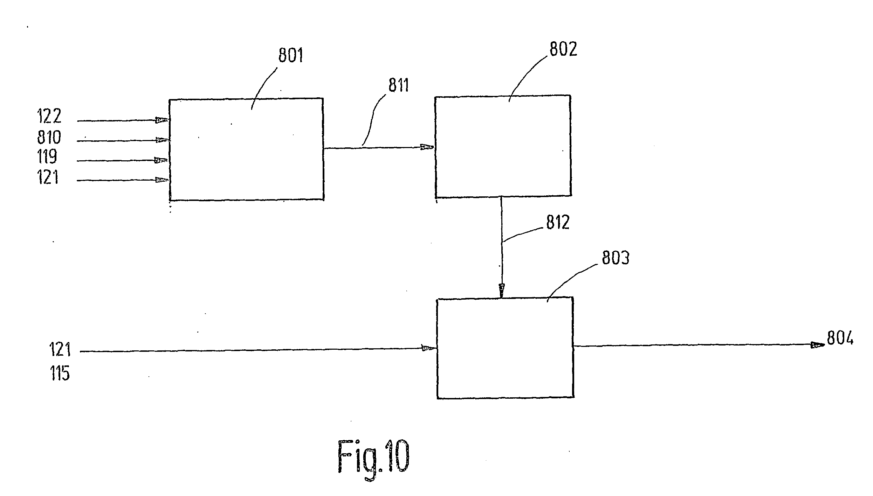

Die Bestimmung der Referenzdrehzahlen wird im Zusammenhang mit Figur 10 beschrieben.

Der Block 502 enthält ein Speicherelement zur Speicherung der Solldrehzahl 512. Dieses Speicherelement ist einem Filterblock zugeordnet. Der Filter realisiert eine Gradientenbegrenzung und eine Tiefpassfilterung erster oder zweiter Ordnung. Die Parameter des Filters werden von den Lieferobjekten bereitgestellt. Dabei wird unterschieden, ob die Solldrehzahl ansteigt oder abfällt. Die Parameterauswahl der Lieferobjekte ist abhängig von dem ermittelten Fahrertyp 516 und der Fahrzeuggeschwindigkeit/Abtriebsdrehzahl 121.

Der Block 504 enthält ein Speicherelement zur Speicherung der Sollübersetzung 206. Dieses Speicherelement ist einem Filterblock zugeordnet. Der Filter realisiert eine Gradientenbegrenzung und eine Tiefpassfilterung erster oder zweiter Ordnung. Die Parameter des Filters werden von den Lieferobjekten bereitgestellt. Dabei wird unterschieden, ob die Sollübersetzung ansteigt oder abfällt. Die Parameterauswahl der Lieferobjekte ist abhängig von dem ermittelten Fahrertyp 516.

In einer weiteren Ausgestaltung kann es vorteilhaft sein die Gradientenbegrenzung in Form einer Soll-Drehzahländerung im Steuergerät abzulegen und dann mit Hilfe der Abtriebsreferenzdrehzahl (falls Getriebeübersetzung) beziehungsweise Sekundärreferenzdrehzahl (falls Variatorübersetzung) in einen Übersetzungsgradienten umzurechnen:

$$\left(\frac{di}{dt}\right)_{max} = \frac{\left(\frac{dn}{dt}\right)_{max}}{n_{ab,ref}} \qquad (3)$$

Das Speicherelement im Block 502 muss, bei Vorgabe einer Sollübersetzung durch ein Lieferobjekt, an die aktuelle Sollübersetzung 206 angepasst werden. Dazu erfolgt eine Rückrechnung, die sich durch Umstellung der Gleichung (1) beziehungsweise (2) ergibt. Das Ergebnis der Rückrechnung wird im Speicherelement des Blocks 502 abgelegt.

Bei Erkennung der Situation Rückwärtsfahrt ist es vorteilhaft eine konstante Übersetzung vorzugeben.

Bei Erkennung der Situation Fast-off ist es vorteilhaft, die aktuelle Übersetzung zu speichern und als SollÜbersetzungsvorgabe zu benutzen.

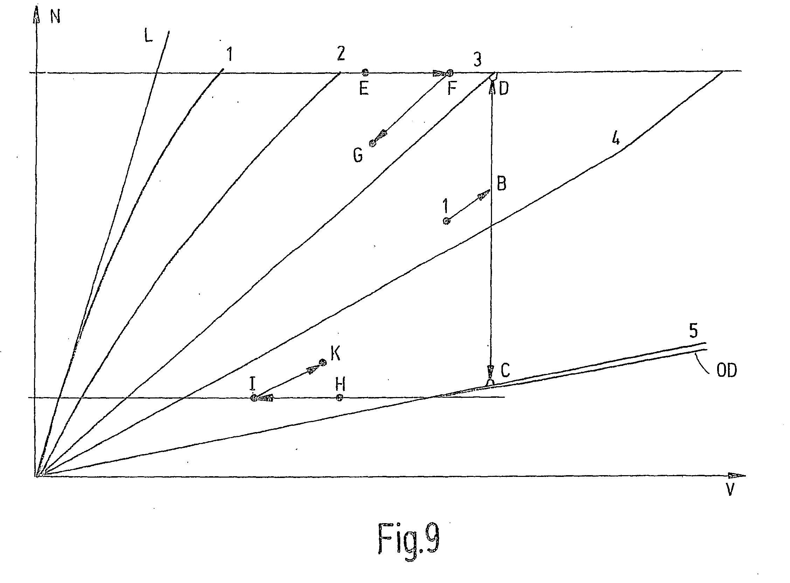

Bei Erkennung der Situation manueller Tip-Mode ist es vorteilhaft eine Sollübersetzung vorzugeben (siehe Figur 9) .

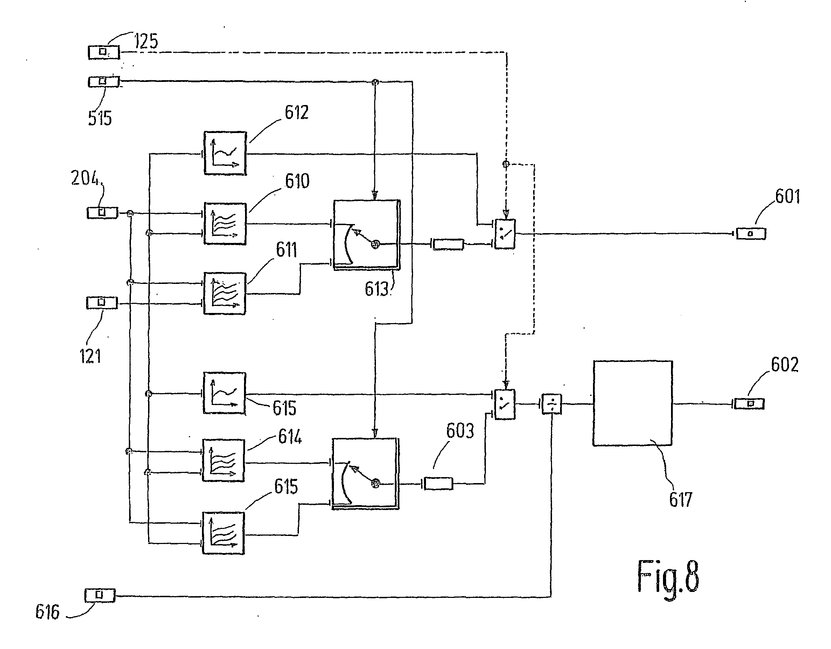

Figur 8 zeigt ein Blockdiagramm zur Bestimmung einer Solldrehzahl in Abhängigkeit bestimmter Betriebsbedingungen. Anstelle der Fahrpedal/Drosselklappenstellung wird der relative Leistungswunsch zur Drehzahlbestimmung im Economy (Sport-Modus) benutzt. Mit dem Signal Fahrertyp wird zwischen den Ergebnissen aus einem Kennfeldblock 610 für Economy und einem Kennfeldblock 611 für Sport mit dem Block 613 interpoliert. Dabei wird der Fahrertyp als Wert zwischen 0 und 100% skaliert.

Zusätzlich zur Vorgabe einer Solldrehzahl 601 wird eine Übersetzungsbegrenzung vorgeschlagen. Die Übersetzungsgrenze 602 kann dabei wiederum aus zwei Drehzahlkennfeldern für Economy 614 und für Sport 615 bestimmt werden. Mittels der Formel (1) wird diese Drehzahl 603 in eine Übersetzung 602 umgerechnet.

Im Falle, dass der Fahrer durch völliges Durchtreten des Fahrpedals den Kick-Down-Schalter aktiviert, werden andere Kennlinien aktiviert als im reinen Economy/Sport-Modus und zwar die Kennlinien 612 und 615.

Figur 9 zeigt ein Diagramm (Variogramm) mit möglichen Übersetzungsverläufen, wobei eine Drehzahl gegen die Fahrzeuggeschwindigkeit aufgetragen ist. Ferner sind eine untere Grenze L ("low") sowie eine obere Grenze OD ("overdrive") eingezeichnet.

Es sind 5 Gänge dargestellt. Schaltet der Fahrer im Punkt A in den manuellen Betrieb, dann wird die Übersetzung zunächst beibehalten und der Übersetzung der Gang zugeordnet, der dem Punkt A am nächsten ist. Im dargestellten Fall ist das der 4. Gang. Der Fahrer fährt dann beispielsweise bis zum Punkt B ohne weiteren manuellen Eingriff. Erst wenn der Fahrer eine Hoch- oder Runterschaltung durch Betätigung des Wählhebels nach "+" oder "-" auslöst, wird die Übersetzung nach der Kennlinie verändert, in Richtung C beziehungsweise D. Weiterhin kann der Fall eintreten, dass durch Beschleunigung des Fahrzeugs oder durch Verzögern des Fahrzeugs eine Drehzahlobergrenze Nmax oder Untergrenze Nmin über- beziehungsweise unterschritten wird. In diesem Fall löst das Getriebe eine Zwangshochschaltung- (E-F) beziehungsweise Zwangsrückschaltung (H-I) aus. Dabei wird jedoch nicht in ganzen Gangstufen geschaltet. Vielmehr wird die Übersetzung stufenlos verändert und immer der nächstliegende Gang zugeordnet. Verzögert beziehungsweise beschleunigt der Fahrer das Fahrzeug dann erneut, dann wird die "Zwischenübersetzung" gehalten (Punkt G und K).

Figur 10 zeigt ein Blockdiagramm zur Erläuterung der Bestimmung von Referenzdrehzahlsignalen. In einem Block 803 ist ein Filteralgorithmus vorgesehen, der das Abtriebsdrehzahlsignal 121 beziehungsweise das Sekundärdrehzahlsignal 115 filtert. Er liefert die Referenzabtriebs- beziehungsweise Referenzsekundärdrehzahl 804. Die Filterparameter 812 des Blocks 803 werden von dem Block 802 vorgegeben. Die Filterparameter 812 sind unterschiedlich für ansteigende und abfallende Drehzahlen 121. Parameter können zum Beispiel Filterzeitkonstanten und minimale und maximale Gradienten sein. Der Block 801 liefert einen Beschleunigungsindex 811, der angibt, ob das Fahrzeug eher beschleunigt oder eher verzögert. Dieser Beschleunigungsindex wirkt sich auf die Wahl der Filterparameter aus.

Der Beschleunigungsindex 811 wird durch Auswertung von Signalen der Motorsteuerung und weiteren Signalen festgelegt. Dabei gehen ein: die Motordrehzahl 122, das von der Motorsteuerung ermittelte Motordrehmoment 810, das Bremssignal 119 und die aktuelle Abtriebsdrehzahl beziehungsweise Fahrzeuggeschwindigkeit 121.

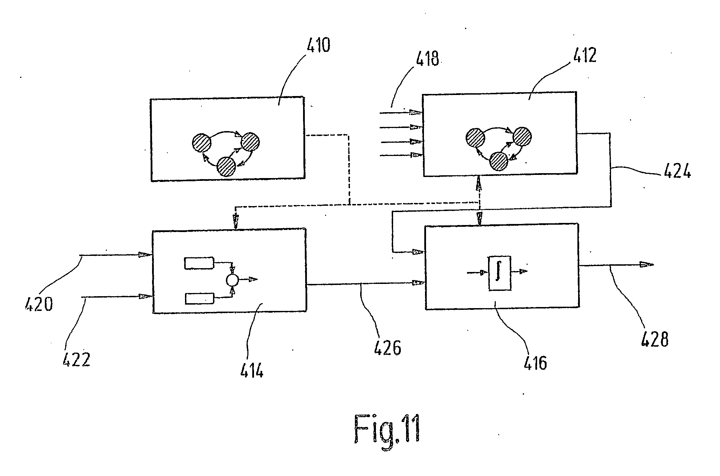

Figur 11 zeigt ein Blockdiagramm zur Erläuterung der Bestimmung einer Referenzgeschwindigkeit. Block 410 dient dem Erkennen der Fahrsituation. Diese wird an einen Block 412 zum Ermitteln einer Referenzdrehzahl, einem Block 414 mit einem Fahrzeugmodell und einem Beobachterblock 416 übermittelt. Dem Block 412 zum Ermitteln einer Referenzdrehzahl werden weiterhin Raddrehzahlen 418 eingegeben. Das Fahrzeugmodell erhält als weitere Eingaben das Vortrieb- und Bremsradmoment 420 sowie den Fahrwiderstand 422. Die Referenzdrehzahl 424 als Ausgangswert des Blocks 412 wird dem Beobachterblock 416 neben der durch das Fahrzeugmodell 414 geschätzten Beschleunigung 426 eingegeben. Das Ergebnis des Beobachterblocks 416 ist die Referenzgeschwindigkeit 428.

Auf diese Weise kann die Referenzabtriebsdrehzahl 804 ($N_{ab,ref}$) aus der Referenzgeschwindigkeit ($V_{Fzg}$) durch Multiplikation mit einem Faktor bestimmt werden:

$$N_{ab,ref} = k_{ab,vfz} * V_{Fzg} \qquad (4)$$

Das Verfahren besteht aus den folgenden Teilfunktionen:

- Erkennen einer Fahrsituation;
- Bildung einer Referenzraddrehzahl;
- Berechnung einer geschätzten Beschleunigung;
- Beobachteralgorithmus zur Bestimmung der Referenzgeschwindigkeit.

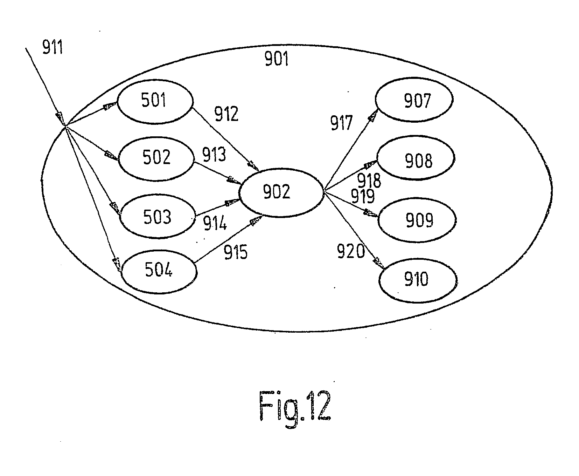

Figur 12 zeigt eine schematische Darstellung einer objektorientierten Steuerungsstruktur entsprechend dem in Figur 7 gezeigten Blockdiagramm. Die objektorientierte Steuerungsstruktur 901 ist eine Umsetzung der Sollübersetzungsbestimmung.

Die Anfrage 911 symbolisiert den Auftrag zur Berechnung einer Sollübersetzung auf Basis des relativen Fahrervortriebswunsches.

Im Mittelpunkt der Steuerungsstruktur 901 steht das Verwalterobjekt 902. Das Verwalterobjekt 902 führt die Abfrage der Lieferobjekte 907 bis 910 durch. Die Lieferobjekte stellen Teilfunktionalitäten der Steuerungsstruktur zur Verfügung und sind im Allgemeinen auf bestimmte Fahrsituationen spezialisiert. Die Lieferobjekte können bestimmte Informationen an das Verwalterobjekt zurückgeben, wenn dieser die Lieferobjekte mit Abfragen 917 bis 920 abfragt.

Das Objekt 501 zur Ermittlung der stationären Solldrehzahl fragt das Verwalterobjekt 902 nach einer stationären Solldrehzahl 511. Das Verwalterobjekt 902 kann nun mit einer einstellbaren Priorität die Lieferobjekte 907 bis 910 abfragen, ob diese einen Vorschlag für eine stationäre Solldrehzahl vorbringen möchten. Der höchstpriore Vorschlag gewinnt und wird vom Verwalterobjekt an das aufrufende Objekt 501 zurückgegeben.

Das Objekt 502 stellt analog dazu an das Verwalterobjekt 902 eine Anfrage 913 nach Informationen zur Beeinflussung des dynamischen Verhaltens der Solldrehzahl. Diese Informationen können zum Beispiel Filterparameter und maximale beziehungsweise minimale Drehzahlgradienten sein.

Das Objekt 503 stellt analog dazu an das Verwalterobjekt 902 eine Anfrage 914 nach einem Übersetzungsvorschlag und einer Begrenzungsinformation. Die Begrenzungsinformation gibt an, wie der Übersetzungsvorschlag mit der aus der Solldrehzahl abgeleiteten Übersetzung verrechnet werden soll.

Die Begrenzung gibt an, ob

- der Übersetzungsvorschlag nicht berücksichtigt werden soll;
- der Übersetzungsvorschlag allein die stationäre Sollübersetzung vorgibt;
- der Übersetzungsvorschlag eine Unter- beziehungsweise Obergrenze für die aus der Solldrehzahl abgeleitete Übersetzung darstellt;
- der Übersetzungsvorschlag eine Verstellgrenze für die aus der Solldrehzahl abgeleitete Übersetzung darstellt.

Das Objekt 504 stellt analog dazu an das Verwalterobjekt 902 eine Anfrage 915 nach Informationen zur Beeinflussung des dynamischen Verhaltens der Sollübersetzung. Diese Informationen können z.B. Filterparameter und maximale beziehungsweise minimale Übersetzungsgradienten sein.

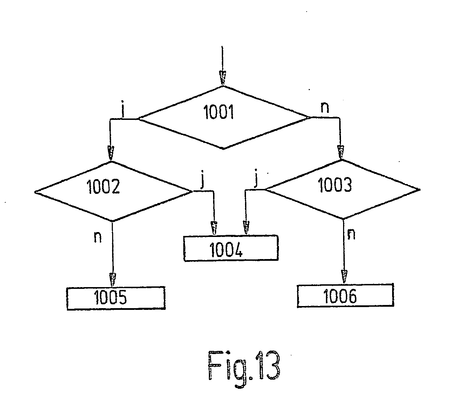

Figur 13 zeigt ein Flussdiagramm zur Erläuterung einer Begrenzungsinformationsabfrage. Es ist eine Begrenzung dargestellt, die durchgeführt wird, wenn die Begrenzungsinformation angibt, ob der Übersetzungsvorschlag eine Unter- beziehungsweise Obergrenze für die aus der Solldrehzahl abgeleitete Übersetzung darstellt.

In der Abfrage 1001 wird getestet, ob die aus der Solldrehzahl abgeleitete Übersetzung größer als die dynamische Sollübersetzung 206 ist. Wenn dies der Fall ist, erfolgt in der Abfrage 1002 ein Test, ob der Übersetzungsvorschlag kleiner als die aus der Solldrehzahl abgeleitete Übersetzung ist. Falls ja, wird der Übersetzungsvorschlag für die stationäre Übersetzung 513 verwendet (Operation 1004). Falls nein, wird die aus der Solldrehzahl abgeleitete Übersetzung für die stationäre Übersetzung 513 verwendet (Operation 1005).

Falls die Abfrage 1001 das Ergebnis "nein" liefert, wird in der Abfrage 1003 geprüft, ob der Übersetzungsvorschlag größer als die aus der Solldrehzahl abgeleitete Übersetzung ist. Falls das der Fall ist, wird die Operation 1004 ausgeführt (siehe oben). Falls dies nicht der Fall ist, wird die Operation 1006 ausgeführt, das heißt die aus der Solldrehzahl abgeleitete Übersetzung wird für die stationäre Übersetzung 513 verwendet.

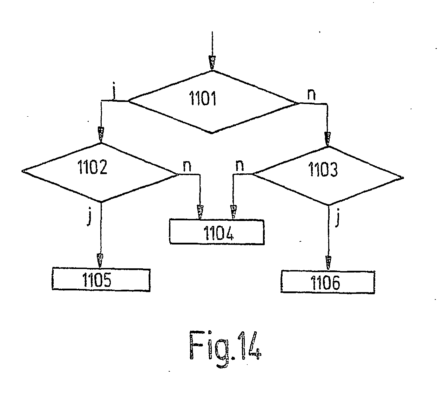

Figur 14 zeigt ein Flussdiagramm zur Erläuterung einer weiteren Begrenzungsinformationsabfrage. Es ist die Begrenzung dargestellt, die durchgeführt wird, wenn die Begrenzungsinformation angibt, ob der Übersetzungsvorschlag eine Verstellgrenze für die aus der Solldrehzahl abgeleitete Übersetzung darstellt.

In der Abfrage 1101 wird getestet, ob die aus der Solldrehzahl abgeleitete Übersetzung größer als die dynamische Sollübersetzung 206 ist. Wenn dies der Fall ist, erfolgt in der Abfrage 1102 ein Test, ob der Übersetzungsvorschlag kleiner als die aus der Solldrehzahl abgeleitete Übersetzung ist. Falls ja, wird die Operation 1105 durchgeführt und das Ergebnis der stationären Sollübersetzung 206 zugewiesen. Die Operation 1105 bildet das Maximum des Übersetzungsvorschlags und der bisherigen dynamischen Sollübersetzung 206. Falls die Abfrage 1102 nein ergibt, wird die aus der Solldrehzahl abgeleitete Übersetzung für die stationäre Übersetzung 513 verwendet (Operation 1104).

Falls die Abfrage 1101 das Ergebnis "nein" liefert, wird in der Abfrage 1103 geprüft, ob der Übersetzungsvorschlag größer als die aus der Solldrehzahl abgeleitete Übersetzung ist. Falls dies nicht der Fall ist ("nein"), wird die Operation 1104 ausgeführt (siehe oben). Falls dies der Fall ist ("ja"), wird die Operation 1106 ausgeführt. Die Operation 1106 bildet das Minimum des Übersetzungsvorschlags und der bisherigen dynamischen Sollübersetzung 206.

**Patentansprüche**

1. System zur Vorgabe eines Motordrehmomentes und einer Getriebeübersetzung bei einem Fahrzeug mit kontinuierlich verstellbarem Getriebe (3) mit

   - Mitteln (201) zum Ermitteln eines einen Fahrerwunsch repräsentierenden Signals, wobei das den Fahrerwunsch repräsentierende Signal ein relativer Fahrervortriebswunsch ist,
   - Mitteln (202) zum Bestimmen eines soll-Motordrehmomentes (205) unter Berücksichtigung des einen Fahrerwunsch repräsentierenden Signals,
   - Mitteln (203) zum Bestimmen einer Getriebeübersetzung (206)

   **dadurch gekennzeichnet, dass** die Mittel (203) zum Bestimmen einer Getriebeübersetzung unter Berücksichtigung des den Fahrerwunsch repräsentierenden Signals eine Soll-Getriebeübersetzung (206) berechnen und dass mehrere Kennfelder oder Berechnungsverfahren zum Ermitteln des relativen Fahrervortriebswunsches (204, 204') vorgesehen sind und die Kennfelder oder Berechnungsverfahren in Abhängigkeit einer Wählhebelstellung (118) verwendbar sind.

2. System nach Anspruch 1, **dadurch gekennzeichnet, dass** der relative Fahrervortriebswunsch ein relativer Fahrerleistungswunsch (204) ist.

3. System nach Anspruch 1, **dadurch gekennzeichnet, dass** der relative Fahrervortriebswunsch ein relativer Fahrerantriebsmomentenwunsch (204') ist.

4. System nach einem der vorangehenden Ansprüche, **dadurch gekennzeichnet, dass** zum Bestimmen des Soll-Motordrehmomentes (205)

   - unter Verwendung der aktuellen Geschwindigkeit (121) der relative Fahrerleistungswunsch (204) mit einer für konstante Geschwindigkeit erforderlichen Abtriebsleistung (311) verglichen wird,
   - unter Verwendung der Motordrehzahl (122) die maximale Antriebsleistung (312) ermittelt wird,
   - unter Verwendung der Motordrehzahl (122) die minimale Antriebsleistung (313) ermittelt wird,
   - unter Verwendung der Eingangsdrehzahl (114) des Getriebes und der Motordrehzahl (122) eine Referenzdrehzahl (314) ermittelt wird,
   - unter Verwendung der erforderlichen Abtriebsleistung (311) für konstante Geschwindigkeit, der maximalen Antriebsleistung (312), der Referenzdrehzahl (314), einer Wandlerverstärkung (323) und dem relativen Fahrerleistungswunsch (204) ein Soll-Motordrehmomentsignal (316) für eine Beschleunigung erzeugt wird,
   - unter Verwendung der erforderlichen Abtriebsleistung (311) für konstante Geschwindigkeit, der minimalen Antriebsleistung (313), der Referenzdrehzahl (314), einer Wandlerverstärkung (323) und dem relativen Fahrerleistungswunsch (204) ein Soll-Motordrehmomentsignal (317) für eine Verzögerung erzeugt wird und
   - durch das Vergleichsergebnis (315) zwischen relativem Fahrerleistungswunsch (204) und für konstante Geschwindigkeit erforderlicher Abtriebsleistung (311) entschieden wird, ob das Soll-Drehmomentsignal (316) für eine Beschleunigung oder das Soll-Drehmomentsignal (317) für eine Verzögerung zum Bestimmen des Soll-Motordrehmomentes (205) verwendet wird.

5. System nach einem der vorangehenden Ansprüche, **dadurch gekennzeichnet, dass** zum Bestimmen des Soll-Motordrehmomentes (205)

- unter Verwendung der aktuellen Geschwindigkeit (121) der relative Fahrerabtriebsmomentenwunsch (204') mit einem für konstante Geschwindigkeit erforderlichen Abtriebsmoment (311') verglichen wird,
- unter Verwendung der Motordrehzahl (122) das maximale Antriebsmoment (312') ermittelt wird,
- unter Verwendung der Motordrehzahl (122) das minimale Abtriebsmoment (313') ermittelt wird,
- unter Verwendung der Eingangsdrehzahl (114) und der Abtriebsdrehzahl (115) eine Drehmomentverstärkung (314') ermittelt wird,
- unter Verwendung der erforderlichen Abtriebsmoments (311') für konstante Geschwindigkeit, des maximalen Antriebsmoments (312'), der Drehmomentverstärkung (314'), einer Wandlerverstärkung (323) und dem relativen Fahrerabtriebsmomentenwunsch (204') ein Soll-Motordrehmomentsignal (316) für eine Beschleunigung erzeugt wird,
- unter Verwendung des erforderlichen Abtriebsmoments (311') für konstante Geschwindigkeit, des minimalen Antriebsmoments (313'), der Drehmomentverstärkung (314'), einer Wandlerverstärkung (323) und dem relativen Fahrerabtriebsmomentenwunsch (204') ein soll-Motordrehmomentsignal (317) für eine Verzögerung erzeugt wird und
- durch das Vergleichsergebnis (315) zwischen relativem Fahrerabtriebsmomentenwunsch (204') und für konstante Geschwindigkeit erforderlichem Abtriebsmoment (311') entschieden wird, ob das Soll-Drehmomentsignal (316) für eine Beschleunigung oder das Soll-Drehmomentsignal (317) für eine Verzögerung zum Bestimmen des Soll-Motordrehmomentes (205) verwendet wird.

6. System nach einem der vorangehenden Ansprüche, **dadurch gekennzeichnet, dass** zum Bestimmen der Soll-Getriebeübersetzung (206)

- unter Berücksichtigung des relativen Fahrervortriebswunsches (204, 204') und von Betriebsbedingungen (505, 506, 507, 515, 516) eine stationäre Solldrehzahl (511) ermittelt wird,
- aus der stationären Solldrehzahl (511) unter Berücksichtigung von Betriebsbedingungen (516) eine dynamische Solldrehzahl (512) ermittelt wird,
- aus der dynamischen Solldrehzahl (512) unter Berücksichtigung von Betriebsbedingungen (505, 508, 509, 510, 515) eine stationäre Sollübersetzung (513) ermittelt wird und
- aus der stationären Sollübersetzung (513) unter Berücksichtigung von Betriebsbedingungen (515, 516) die Soll-Getriebeübersetzung (206) bestimmt wird.

7. System nach einem der vorangehenden Ansprüche, **dadurch gekennzeichnet, dass** bei der Bestimmung der Soll-Getriebeübersetzung (206) durch Ermittlung einer Solldrehzahl (511, 512, 601) die Übersetzung begrenzt wird (602).

8. System nach einem der vorangehenden Ansprüche, **dadurch gekennzeichnet, dass** beim Umschalten von einem Automatikbetrieb in einen manuellen Betrieb die Übersetzung beibehalten wird.

9. System nach einem der vorangehenden Ansprüche, **dadurch gekennzeichnet, dass** in einem manuellen Betrieb bei Erreichen einer Drehzahlschwelle die Soll-Getriebeübersetzung stufenlos verändert wird, so dass eine Drehzahlgrenze nicht überschritten beziehungsweise unterschritten wird.

10. System nach einem der vorangehenden Ansprüche, **dadurch gekennzeichnet, dass** in einem manuellen Betrieb eine Ganginformation an die aktuell gewählte Getriebeübersetzung angepasst wird.

11. System nach einem der vorangehenden Ansprüche, **dadurch gekennzeichnet, dass** die Bestimmung der Sollgetriebeübersetzung mindestens ein Verwalterobjekt und mehrere Lieferobjekte im Sinne einer objektorientierten Struktur beinhaltet.

12. System nach einem der vorangehenden Ansprüche, **dadurch gekennzeichnet, dass** das Verwalterobjekt die Lieferobjekte abfragt, ob sie Informationen zur Bestimmung der Sollgetriebeübersetzung liefern wollen.

13. System nach einem der vorangehenden Ansprüche, **dadurch gekennzeichnet, dass** die Abfrage der Lieferobjekte priorisiert erfolgt.

14. System nach einem der vorangehenden Ansprüche, **dadurch gekennzeichnet, dass** die Lieferobjekte eine Solldrehzahl und/oder eine Sollübersetzung liefern können.

15. System nach einem der vorangehenden Ansprüche, **dadurch gekennzeichnet, dass** die Lieferobjekte eine weitere Information liefern können, die angibt, wie die sollübersetzung die Solldrehzahlvorgabe begrenzen soll.

16. System nach einem der vorangehenden Ansprüche, **dadurch gekennzeichnet, dass** die Lieferobjekte weitere Informationen zur Beeinflussung der Dynamik der Drehzahlvorgabe liefern können.

17. System nach einem der vorangehenden Ansprüche, **dadurch gekennzeichnet, dass** die Informationen zur Beeinflussung der Dynamik der Drehzahlvorgabe Filterkonstanten sind.

18. System nach einem der vorangehenden Ansprüche, **dadurch gekennzeichnet, dass** die Informationen zur Beeinflussung der Dynamik der Drehzahlvorgabe minimale und/oder maximale Drehzahlgradienten sind.

19. System nach einem der vorangehenden Ansprüche, **dadurch gekennzeichnet, dass** die Informationen zur Beeinflussung der Dynamik der Übersetzungsvorgabe Filterkonstanten sind.

20. System nach einem der vorangehenden Ansprüche, **dadurch gekennzeichnet, dass** die Informationen zur Beeinflussung der Dynamik der Übersetzungsvorgabe minimale und/oder maximale Übersetzungsgradienten sind.

21. Verfahren zur Vorgabe eines Motordrehmomentes und einer Getriebeübersetzung bei einem Fahrzeug mit kontinuierlich verstellbarem Getriebe (3) mit den Schritten:

   - Ermitteln eines einen Fahrerwunsch repräsentierenden Signals, wobei das den Fahrerwunsch repräsentierende Signal ein relativer Fahrervortriebswunsch ist,
   - Bestimmen eines Soll-Motordrehmoment (205) unter Berücksichtigung des den Fahrerwunsch repräsentierenden Signals,
   - Bestimmen einer Getriebeübersetzung (206)

   **dadurch gekennzeichnet, dass** unter Berücksichtigung des den Fahrerwunsch repräsentierenden Signals eine Soll-Getriebeübersetzung (206) berechnet wird und dass mehrere Kennfelder oder Berechnungsverfahren zum Ermitteln des relativen Fahrervortriebswunsches (204, 204') vorgesehen sind und dass die Kennfelder oder Berechnungsverfahren in Abhängigkeit einer Wählhebelstellung (118) verwendet werden.

22. Verfahren nach Anspruch 21, **dadurch gekennzeichnet, dass** der relative Fahrervortriebswunsch ein relativer Fahrerleistungswunsch (204) ist.

23. Verfahren nach Anspruch 21 oder 22, **dadurch gekennzeichnet, dass** der relative Fahrervortriebswunsch ein relativer Fahrerantriebsmomentenwunsch (204') ist.

24. Verfahren nach einem der Ansprüche 21 bis 23, **dadurch gekennzeichnet, dass** zum Bestimmen des Soll-Motordrehmomentes (205)

   - unter Verwendung der aktuellen Geschwindigkeit (121) der relative Fahrerleistungswunsch (204) mit einer für konstante Geschwindigkeit erforderlichen Abtriebsleistung (311) verglichen wird,
   - unter Verwendung der Motordrehzahl (122) die maximale Antriebsleistung (312) ermittelt wird,
   - unter Verwendung der Motordrehzahl (122) die minimale Antriebsleistung (313) ermittelt wird,
   - unter Verwendung der Eingangsdrehzahl (114) des Getriebes und der Motordrehzahl (122) eine Referenzdrehzahl (314) ermittelt wird,
   - unter Verwendung der erforderlichen Abtriebsleistung (311) für konstante Geschwindigkeit, der maximalen Antriebsleistung (312), der Referenzdrehzahl (314), einer Wandlerverstärkung (323) und dem relativen Fahrerleistungswunsch (204) ein Soll-Motordrehmomentsignal (316) für eine Beschleunigung erzeugt wird,
   - unter Verwendung der erforderlichen Abtriebsleistung (311) für konstante Geschwindigkeit, der minimalen Antriebsleistung (313), der Referenzdrehzahl (314), einer Wandlerverstärkung (323) und dem relativen Fahrerleistungswunsch (204) ein soll-Motordrehmomentsignal (317) für eine Verzögerung erzeugt wird und

- durch das Vergleichsergebnis (315) zwischen relativem Fahrerleistungswunsch (204) und für konstante Geschwindigkeit erforderlicher Abtriebsleistung (311) entschieden wird, ob das Soll-Drehmomentsignal (316) für eine Beschleunigung oder das Soll-Drehmomentsignal (317) für eine Verzögerung zum Bestimmen des Soll-Motordrehmomentes (205) verwendet wird.

25. verfahren nach einem der Ansprüche 21 bis 24, **dadurch gekennzeichnet, dass** zum Bestimmen des Soll-Motordrehmomentes (205)

- unter verwendung der aktuellen Geschwindigkeit (121) der relative Fahrerabtriebsmomentenwunsch (204') mit einem für konstante Geschwindigkeit erforderlichen Abtriebsmoment (311') verglichen wird,
- unter Verwendung der Motordrehzahl (122) das maximale Antriebsmoment (312') ermittelt wird,
- unter Verwendung der Motordrehzahl (122) das minimale Abtriebsmoment (313') ermittelt wird,
- unter Verwendung der Eingangsdrehzahl (114) und der Abtriebsdrehzahl (115) eine Drehmomentverstärkung (314') ermittelt wird,
- unter Verwendung der erforderlichen Abtriebsmoments (311') für konstante Geschwindigkeit, des maximalen Antriebsmoments (312'), der Drehmomentverstärkung (314'), einer Wandlerverstärkung (323) und dem relativen Fahrerabtriebsmomentenwunsch (204') ein Soll-Motordrehmomentsignal (316) für eine Beschleunigung erzeugt wird,
- unter Verwendung des erforderlichen Abtriebsmoments (311') für konstante Geschwindigkeit, des minimalen Antriebsmoments (313'), der Drehmomentverstärkung (314'), einer Wandlerverstärkung (323) und dem relativen Fahrerabtriebsmomentenwunsch (204') ein Soll-Motordrehmomentsignal (317) für eine Verzögerung erzeugt wird und
- durch das Vergleichsergebnis (315) zwischen relativem Fahrerabtriebsmomentenwunsch (204') und für konstante Geschwindigkeit erforderlichem Abtriebsmoment (311') entschieden wird, ob das soll-Drehmomentsignal (316) für eine Beschleunigung oder das Soll-Drehmomentsignal (317) für eine Verzögerung zum Bestimmen des Soll-Motordrehmomentes (205) verwendet wird.

26. Verfahren nach einem der Ansprüche 21 bis 25, **dadurch gekennzeichnet, dass** zum Bestimmen der Soll-Getriebeübersetzung (206)

- unter Berücksichtigung des relativen Fahrervortriebswunsches (204, 204') und von Betriebsbedingungen (505, 506, 507, 515, 516) eine stationäre Solldrehzahl (511) ermittelt wird,
- aus der stationären Solldrehzahl (511) unter Berücksichtigung von Betriebsbedingungen (516) eine dynamische Solldrehzahl (512) ermittelt wird,
- aus der dynamischen Solldrehzahl (512) unter Berücksichtigung von Betriebsbedingungen (505, 508, 509, 510, 515) eine stationäre Sollübersetzung (513) ermittelt wird und
- aus der stationären Sollübersetzung (513) unter Berücksichtigung von Betriebsbedingungen (515, 516) die Soll-Getriebeübersetzung (206) bestimmt wird.

27. Verfahren nach einem der Ansprüche 21 bis 26, **dadurch gekennzeichnet, dass** bei der Bestimmung der Soll-Getriebeübersetzung (206) durch Ermittlung einer Solldrehzahl (511, 512, 601) die Übersetzung begrenzt wird (602).

28. Verfahren nach einem der Ansprüche 21 bis 27, **dadurch gekennzeichnet, dass** beim Umschalten von einem Automatikbetrieb in einen manuellen Betrieb die Übersetzung beibehalten wird.

29. Verfahren nach einem der Ansprüche 21 bis 28 **dadurch gekennzeichnet, dass** in einem manuellen Betrieb bei Erreichen einer Drehzahlschwelle die Soll-Getriebeübersetzung stufenlos verändert wird, so dass eine Drehzahlgrenze nicht überschritten beziehungsweise unterschritten wird.

30. Verfahren nach einem der Ansprüche 21 bis 29, **dadurch gekennzeichnet, dass** in einem manuellen Betrieb eine Ganginformation an die aktuell gewählte Getriebeübersetzung angepasst wird.

31. Verfahren nach einem der Ansprüche 21 bis 30, **dadurch gekennzeichnet, dass** die Bestimmung der Sollgetriebeübersetzung mindestens ein Verwalterobjekt und mehrere Lieferobjekte im Sinne einer objektorientierten Struktur beinhaltet.

32. Verfahren nach einem der Ansprüche 21 bis 31, **dadurch gekennzeichnet, dass** das Verwalterobjekt die Lieferobjekte abfragt, ob sie Informationen zur Bestimmung der Sollgetriebeübersetzung liefern wollen.

33. Verfahren nach einem der Ansprüche 21 bis 32, **dadurch gekennzeichnet, dass** die Abfrage der Lieferobjekte priorisiert erfolgt.

34. Verfahren nach einem der Ansprüche 21 bis 33, **dadurch gekennzeichnet, dass** die Lieferobjekte eine Solldrehzahl und/oder eine Sollübersetzung liefern können.

35. Verfahren nach einem der Ansprüche 21 bis 34, **dadurch gekennzeichnet, dass** die Lieferobjekte eine weitere Information liefern können, die angibt, wie die sollübersetzung die Solldrehzahlvorgabe begrenzen soll.

36. Verfahren nach einem der Ansprüche 21 bis 35, **dadurch gekennzeichnet, dass** die Lieferobjekte weitere Informationen zur Beeinflussung der Dynamik der Drehzahlvorgabe liefern können.

37. Verfahren nach einem der Ansprüche 21 bis 36, **dadurch gekennzeichnet, dass** die Informationen zur Beeinflussung der Dynamik der Drehzahlvorgabe Filterkonstanten sind.

38. Verfahren nach einem der Ansprüche 21 bis 37, **dadurch gekennzeichnet, dass** die Informationen zur Beeinflussung der Dynamik der Drahzahlvorgabe minimale und/oder maximale Drehzahlgradienten sind.

39. Verfahren nach einem der Ansprüche 21 bis 38, **dadurch gekennzeichnet, dass** die Informationen zur Beeinflussung der Dynamik der Übersetzungsvorgabe Filterkonstanten sind.

40. Verfahren nach einem der Ansprüche 21 bis 39, **dadurch gekennzeichnet, dass** die Informationen zur Beeinflussung der Dynamik der Übersetzungsvorgabe minimale und/oder maximale Übersetzungsgradienten sind.

**Claims**

1. System for setting an engine torque and a gearbox transmission ratio in a vehicle with a continuously adjustable gearbox (3) having

   - means (201) for acquiring a signal which represents a driver's request, wherein the signal which represents the driver's request is a relative driver's propulsion request,
   - means (202) for determining a setpoint engine torque (205) taking into account the signal which represents a driver's request,
   - means (203) for determining a gearbox transmission ratio (206),

   **characterized in that** the means (203) for determining a gearbox transmission ratio taking into account the signal which represents the driver's request calculate a setpoint gearbox transmission ratio (206), and **in that** a plurality of characteristic diagrams or calculation methods are provided for acquiring the relative driver's propulsion request (204, 204'), and the characteristic diagrams or calculation methods can be used as a function of a selector lever position (118) .

2. System according to Claim 1, **characterized in that** the relative driver's propulsion request is a relative driver's power request (204).

3. System according to Claim 1, **characterized in that** the relative driver's propulsion request is a relative driver's drive torque request (204').

4. System according to one of the preceding claims, **characterized in that**, in order to determine the setpoint engine torque (205)

   - the relative driver's power request (204) is compared with an output power (311) necessary for a constant velocity, using the current velocity (121),
   - the maximum drive power (312) is acquired using the engine speed (122),
   - the minimum drive power (313) is acquired using the engine speed (122),
   - a reference rotational speed (314) is acquired using the input rotational speed (114) of the gearbox and the engine speed (122),
   - a setpoint engine torque signal (316) for an acceleration is generated using the necessary output power (311) for constant velocity, the maximum drive power (312), the reference rotational speed (314), a converter gain (323) and the relative driver's power request (204),
- a setpoint engine torque signal (317) for a deceleration is generated using the necessary output power (311) for constant velocity, the minimum drive power (313), the reference rotational speed (314), a converter gain (323) and the relative driver's power request (204), and
- by means of the result (315) of the comparison between the relative driver's power request (204) and the output power (311) necessary for constant velocity it is decided whether the setpoint torque signal (316) is used for an acceleration, or the setpoint torque signal (317) is used for a deceleration for the determination of the setpoint engine torque (205).

5. System according to one of the preceding claims, **characterized in that**, in order to determine the setpoint engine torque (205)

- the relative driver's output torque request (204') is compared with an output torque (311') necessary for a constant velocity, using the current velocity (121),
- the maximum drive torque (312') is acquired using the engine speed (122),
- the minimum output torque (313') is acquired using the engine speed (122),
- a torque gain (314') is acquired using the input rotational speed (114) and the output rotational speed (115),
- a setpoint engine torque signal (316) for an acceleration is generated using the necessary output torque (311') for constant velocity, the maximum drive torque (312'), the torque gain (314'), a converter gain (323) and the relative driver's output torque request (204'),
- a setpoint engine torque signal (317) for a deceleration is generated using the necessary output torque (311') for constant velocity, the minimum drive torque (313'), the torque gain (314'), a converter gain (323) and the relative driver's output torque request (204'), and
- by means of the result (315) of the comparison between the relative driver's output torque request (204') and the output torque (311') necessary for constant velocity it is decided whether the setpoint torque signal (316) is used for an acceleration, or the setpoint torque signal (317) is used for a deceleration for the determination of the setpoint engine torque (205).

6. System according to one of the preceding claims, **characterized in that**, in order to determine the setpoint gearbox transmission ratio (206)

- a steady-state setpoint rotational speed (511) is acquired taking into account the relative driver's propulsion request (204, 204') and operating conditions (505, 506, 507, 515, 516),
- a dynamic setpoint rotational speed (512) is acquired from the steady-state setpoint rotational speed (511) taking into account operating conditions (516),
- a steady-state setpoint transmission ratio (513) is acquired from the dynamic setpoint rotational speed (512) taking into account operating conditions (505, 508, 509, 510, 515), and
- the setpoint gearbox transmission ratio (206) is determined from the steady-state setpoint transmission ratio (513) taking into account operating conditions (515, 516).

7. System according to one of the preceding claims, **characterized in that** during the determination of the setpoint gearbox transmission ratio (206) the transmission ratio is limited (602) by acquiring a setpoint rotational speed (511, 512, 601).

8. System according to one of the preceding claims, **characterized in that** the transmission ratio is maintained at the switchover from an automatic operating mode into a manual operating mode.

9. System according to one of the preceding claims, **characterized in that** the setpoint gearbox transmission ratio is varied infinitely in a manual operating mode when a rotational speed threshold is reached, with the result that a rotational speed limit is not exceeded or undershot.

10. System according to one of the preceding claims, **characterized in that** in a manual operating mode gearspeed information is adapted to the currently selected gearbox transmission ratio.

11. System according to one of the preceding claims, **characterized in that** the determination of the setpoint gearbox transmission ratio includes at least one manager object and a plurality of supply objects in the sense of an object-oriented structure.

**12.** System according to one of the preceding claims, **characterized in that** the manager object interrogates the supply objects as to whether they wish to supply information for determining the setpoint gearbox transmission ratio.

**13.** System according to one of the preceding claims, **characterized in that** the interrogation of the supply objects is carried out in a prioritized fashion.

**14.** System according to one of the preceding claims, **characterized in that** the supply objects can supply a setpoint rotational speed and/or a setpoint transmission ratio.

**15.** System according to one of the preceding claims, **characterized in that** the supply objects can supply further information which indicates how the setpoint transmission ratio is to limit the setpoint rotational speed setting.

**16.** System according to one of the preceding claims, **characterized in that** the supply objects can supply further information for influencing the dynamics of the rotational speed setting.

**17.** System according to one of the preceding claims, **characterized in that** the information for influencing the dynamics of the rotational speed setting comprises filter constants.

**18.** System according to one of the preceding claims, **characterized in that** the information for influencing the dynamics of the rotational speed setting comprises minimum and/or maximum rotational speed gradients.

**19.** System according to one of the preceding claims, **characterized in that** the information for influencing the dynamics of the transmission ratio setting comprises filter constants.

**20.** System according to one of the preceding claims, **characterized in that** the information for influencing the dynamics of the transmission ratio setting comprises minimum and/or maximum transmission ratio gradients.

**21.** Method for setting an engine torque and a gearbox transmission ratio in a vehicle with a continuously adjustable gearbox (3) having the steps:

- acquisition of a signal which represents a driver's request, wherein the signal which represents the driver's request is a relative driver's propulsion request,
- determination of a setpoint engine torque (205) taking into account the signal which represents the driver's request, and
- determination of a gearbox transmission ratio (206),

**characterized in that** a setpoint gearbox transmission ratio (206) is calculated taking into account the signal which represents the driver's request, and **in that** a plurality of characteristic diagrams or calculation methods are provided for acquiring the relative driver's propulsion request (204, 204'), and **in that** the characteristic diagrams or calculation methods are used as a function of a selector lever position (118).

**22.** Method according to Claim 21, **characterized in that** the relative driver's propulsion request is a relative driver's power request (204).

**23.** Method according to Claim 21 or 22, **characterized in that** the relative driver's propulsion request is a relative driver's drive torque request (204').

**24.** Method according to one of Claims 21 to 23, **characterized in that**, in order to determine the setpoint engine torque (205),

- the relative driver's power request (204) is compared with an output power (311) necessary for a constant velocity, using the current velocity (121),
- the maximum drive power (312) is acquired using the engine speed (122),
- the minimum drive power (313) is acquired using the engine speed (122).
- a reference rotational speed (314) is acquired using the input rotational speed (114) of the gearbox and the engine speed (122),
- a setpoint engine torque signal (316) for an acceleration is generated using the necessary output power (311) for constant velocity, the maximum drive power (312), the reference rotational speed (314), a converter gain (323) and the relative driver's power request (204),
- a setpoint engine torque signal (317) for a deceleration is generated using the necessary output power (311) for constant velocity, the minimum drive power (313), the reference rotational speed (314), a converter gain (323) and the relative driver's power request (204), and
- by means of the result (315) of the comparison between the relative driver's power request (204) and the output power (311) necessary for constant velocity it is decided whether the setpoint torque signal (316) is used for an acceleration, or the setpoint torque signal (317) is used for a deceleration for the determination of the setpoint engine torque (205).

25. Method according to one of Claims 21 to 24, **characterized in that**, in order to determine the setpoint engine torque (205)

- the relative driver's output torque request (204') is compared with an output torque (311') necessary for a constant velocity, using the current velocity (121),
- the maximum drive torque (312') is acquired using the engine speed (122),
- the minimum output torque (313') is acquired using the engine speed (122),
- a torque gain (314') is acquired using the input rotational speed (114) and the output rotational speed (115),
- a setpoint engine torque signal (316) for an acceleration is generated using the necessary output torque (311') for constant velocity, the maximum drive torque (312'), the torque gain (314'), a converter gain (323) and the relative driver's output torque request (204'),
- a setpoint engine torque signal (317) for a deceleration is generated using the necessary output torque (311') for constant velocity, the minimum drive torque (313'), the torque gain (314'), a converter gain (323) and the relative driver's output torque request (204'), and
- by means of the result (315) of the comparison between the relative driver's output torque request (204') and the output torque (311') necessary for constant velocity it is decided whether the setpoint torque signal (316) is used for an acceleration, or the setpoint torque signal (317) is used for a deceleration for the determination of the setpoint engine torque (205).

26. Method according to one of Claims 21 to 25, **characterized in that**, in order to determine the setpoint gearbox transmission ratio (206)

- a steady-state setpoint rotational speed (511) is acquired taking into account the relative driver's propulsion request (204, 204') and operating conditions (505, 506, 507, 515, 516),
- a dynamic setpoint rotational speed (512) is acquired from the steady-state setpoint rotational speed (511) taking into account operating conditions (516),
- a steady-state setpoint transmission ratio (513) is acquired from the dynamic setpoint rotational speed (512) taking into account operating conditions (505, 508, 509, 510, 515), and
- the setpoint gearbox transmission ratio (206) is determined from the steady-state setpoint transmission ratio (513) taking into account operating conditions (515, 516).

27. Method according to one of Claims 21 to 26, **characterized in that** during the determination of the setpoint gearbox transmission ratio (206) the transmission ratio is limited (602) by acquiring a setpoint rotational speed (511, 512, 601).

28. Method according to one of Claims 21 to 27, **characterized in that** the transmission ratio is maintained at the switchover from an automatic operating mode into a manual operating mode.

29. Method according to one of Claims 21 to 28, **characterized in that** the setpoint gearbox transmission ratio is varied infinitely in a manual operating mode when a rotational speed threshold is reached, with the result that a rotational speed limit is not exceeded or undershot.

30. Method according to one of Claims 21 to 29, **characterized in that** in a manual operating mode gearspeed information is adapted to the currently selected gearbox transmission ratio.

31. Method according to one of Claims 21 to 30, **characterized in that** the determination of the setpoint gearbox transmission ratio includes at least one manager object and a plurality of supply objects in the sense of an object-oriented structure.

32. Method according to one of Claims 21 to 31, **characterized in that** the manager object interrogates the supply objects as to whether they wish to supply information for determining the setpoint gearbox transmission ratio.

33. Method according to one of Claims 21 to 32, **characterized in that** the interrogation of the supply objects is carried out in a prioritized fashion.

34. Method according to one of Claims 21 to 33, **characterized in that** the supply objects can supply a setpoint rotational speed and/or a setpoint transmission ratio.

35. Method according to one of Claims 21 to 34, **characterized in that** the supply objects can supply further information which indicates how the setpoint transmission ratio is to limit the setpoint rotational speed setting.

36. Method according to one of Claims 21 to 35, **characterized in that** the supply objects can supply further information for influencing the dynamics of the rotational speed setting.

37. Method according to one of Claims 21 to 36, **characterized in that** the information for influencing the dynamics of the rotational speed setting comprises filter constants.

38. Method according to one of Claims 21 to 37, **characterized in that** the information for influencing the dynamics of the rotational speed setting comprises minimum and/or maximum rotational speed gradients.

39. Method according to one of Claims 21 to 38, **characterized in that** the information for influencing the dynamics of the transmission ratio setting comprises filter constants.

40. Method according to one of Claims 21 to 39, **characterized in that** the information for influencing the dynamics of the transmission ratio setting comprises minimum and/or maximum transmission ratio gradients.


**Revendications**

1. Système pour prédéfinir un couple moteur et un rapport de transmission d'un véhicule équipé d'une transmission à variation continue (3) comprenant :

   - des moyens (201) pour déterminer un signal représentant une demande du conducteur, ce signal étant une demande de marche avant relative du conducteur,
   - des moyens (202) pour déterminer un couple moteur de consigne (205) en tenant compte du signal représentant la demande du conducteur,
   - des moyens (203) pour déterminer un rapport de transmission (206),

   **caractérisé en ce que**
   les moyens (203) pour déterminer un rapport de transmission calculent un rapport de transmission de consigne (206) en tenant compte du signal représentant la demande du conducteur, et
   plusieurs champs de caractéristiques ou procédés de calcul sont prévus pour déterminer la demande de marche avant relative du conducteur (204, 204') et les champs de caractéristiques ou les procédés de calcul sont applicables en fonction d'un réglage de levier sélecteur (118).

2. Système selon la revendication 1,
   **caractérisé en ce que**
   la demande de marche avant relative du conducteur est une demande de puissance relative du conducteur (204).

3. Système selon la revendication 1,
   **caractérisé en ce que**
   la demande de marche avant relative du conducteur est une demande de couple d'entraînement relatif du conducteur (204').

4. Système selon l'une quelconque des revendications précédentes,
   **caractérisé en ce que**
   pour déterminer le couple moteur de consigne (205),

- en utilisant la vitesse actuelle (121), on compare la demande de puissance relative du conducteur (204) à une puissance de sortie (311) nécessaire pour une vitesse constante,
- en utilisant la vitesse de rotation du moteur (122), on détermine la puissance d'entraînement maximale (312),
- en utilisant la vitesse de rotation du moteur (122), on détermine la puissance d'entraînement minimale (313),
- en utilisant la vitesse de rotation d'entrée (114) de la transmission et la vitesse de rotation du moteur (122), on détermine une vitesse de rotation de référence (314),
- en utilisant la puissance de sortie (311) nécessaire pour avoir une vitesse constante, la puissance d'entraînement maximale (313), la vitesse de rotation de référence (314), une amplification de convertisseur (323) et la demande de puissance relative du conducteur (204), on génère un signal de couple moteur de consigne (316) pour une accélération,
- en utilisant la puissance de sortie (311) nécessaire pour une vitesse constante, la puissance d'entraînement minimale (313), la vitesse de rotation de référence (314), une amplification de convertisseur (323) et la demande de puissance relative du conducteur (204), on détermine un signal de couple moteur de consigne (317) pour une décélération, et
- par le résultat de la comparaison (315) entre la demande de puissance relative du conducteur (204) et la puissance de sortie (311) nécessaire pour avoir une vitesse constante, on décide si le signal de couple de consigne (316) pour une accélération ou le signal de couple de consigne (317) pour une décélération doivent être utilisés pour déterminer le couple moteur de consigne (205).

5. Système selon l'une quelconque des revendications précédentes, **caractérisé en ce que** pour déterminer le couple moteur de consigne (205),

- en utilisant la vitesse actuelle (121), on compare la demande de couple de sortie relatif du conducteur (204') à un couple de sortie (311') nécessaire pour une vitesse constante,
- en utilisant la vitesse de rotation du moteur (122) on détermine le couple d'entraînement maximum (312'),
- en utilisant la vitesse de rotation (122) on détermine le couple de sortie minimum (313'),
- en utilisant la vitesse de rotation d'entrée (114) et la vitesse de rotation de sortie (115), on détermine une amplification de couple (314'),
- en utilisant le couple de sortie nécessaire (311') pour la vitesse constante, le couple d'entraînement maximum (312'), l'amplification de couple (314'), une amplification de convertisseur (323) et la demande de couple de sortie relative du conducteur (204'), on génère un signal de couple moteur de consigne (316) pour l'accélération,
- en utilisant le couple de sortie nécessaire (311') pour la vitesse constante, le couple d'entraînement minimum (313'), l'amplification de couple (314'), un coefficient d'amplification de convertisseur (323) et la demande de couple de sortie relatif du conducteur (204'), on génère un signal de couple moteur de consigne (317) pour une décélération, et
- par le résultat de la comparaison (315) entre la demande de couple de sortie relatif du conducteur (204') et le couple de sortie (311') nécessaire pour une vitesse constante, on décide s'il faut utiliser le signal de couple de consigne (316) pour une accélération ou le signal de couple de consigne (317) pour une décélération, afin de déterminer le couple moteur de consigne (205).

6. Système selon l'une quelconque des revendications précédentes, **caractérisé en ce que** pour déterminer le rapport de transmission de consigne (206),

- en tenant compte de la demande d'entraînement relatif du conducteur (204, 204') et des conditions de fonctionnement (505, 506, 507, 515, 16), on détermine une vitesse de rotation de consigne stationnaire (511),
- à partir de la vitesse de rotation de consigne stationnaire (511) en tenant compte des conditions de fonctionnement (516), on détermine une vitesse de rotation de consigne dynamique (512),
- à partir de la vitesse de rotation de consigne dynamique (512) en tenant compte des conditions de fonctionnement (505, 508, 509, 510, 515), on détermine un rapport de démultiplication de consigne, stationnaire (513), et
- à partir du rapport de démultiplication de consigne, stationnaire (513) et en tenant compte des conditions de fonctionnement (515, 516), on détermine le rapport de transmission de consigne (206).

7. Système selon l'une quelconque des revendications précédentes, **caractérisé en ce qu'** en déterminant le rapport de transmission de consigne (206) par la détermination d'une vitesse de rotation de consigne (511, 512, 601), on limite la démultiplication.

8. Système selon l'une quelconque des revendications précédentes,
**caractérisé en ce qu'**
on conserve le rapport de démultiplication lorsqu'on commute du mode de fonctionnement automatique au mode de fonctionnement manuel.

9. Système selon l'une quelconque des revendications précédentes,
**caractérisé en ce qu'**
en fonctionnement manuel, lorsqu'on atteint un seuil de vitesse de rotation, on modifie en continu le rapport de transmission de consigne de façon à ne dépasser une limite de vitesse de rotation ni vers le haut, ni vers le bas.

10. Système selon l'une quelconque des revendications précédentes,
**caractérisé en ce qu'**
en mode de fonctionnement manuel, on adapte une information de rapport de vitesse à la démultiplication de transmission sélectionnée actuellement.

11. Système selon l'une quelconque des revendications précédentes,
**caractérisé en ce que**
la détermination du rapport de démultiplication de transmission de consigne contient au moins un objet de gestion et plusieurs objets de fournitures dans le sens d'une structure orientée objet.

12. Système selon l'une quelconque des revendications précédentes,
**caractérisé en ce que**
l'objet de gestion interroge les objets de fournitures pour déterminer s'ils veulent fournir des informations pour déterminer le rapport de transmission de consigne.

13. Système selon l'une quelconque des revendications précédentes,
**caractérisé en ce que**
l'interrogation des objets de fourniture est prioritaire.

14. Système selon l'une quelconque des revendications précédentes,
**caractérisé en ce que**
les objets de fourniture peuvent fournir une vitesse de rotation de consigne et/ou une démultiplication de consigne.

15. Système selon l'une quelconque des revendications précédentes,
**caractérisé en ce que**
les objets de fourniture peuvent fournir une autre information indiquant comment la démultiplication de consigne doit limiter la consigne de vitesse de rotation.

16. Système selon l'une quelconque des revendications précédentes,
**caractérisé en ce que**
les objets de fourniture peuvent donner d'autres informations pour influencer la dynamique de la consigne de vitesse de rotation.

17. Système selon l'une quelconque des revendications précédentes,
**caractérisé en ce que**
les informations pour influencer la dynamique de la consigne de vitesse de rotation sont des constantes de filtre.

18. Système selon l'une quelconque des revendications précédentes,
**caractérisé en ce que**
les informations pour influencer la dynamique de la consigne de vitesse de rotation sont des gradients minimum et/ou maximum de vitesse de rotation.

19. Système selon l'une quelconque des revendications précédentes,
**caractérisé en ce que**
les informations pour influencer la dynamique de la consigne de démultiplication sont des constantes de filtre.

20. Système selon l'une quelconque des revendications précédentes,
**caractérisé en ce que**

les informations pour influencer la dynamique de la consigne de démultiplication sont des gradients minimum et/ou maximum de démultiplication.

21. Procédé de prédéfinition d'un couple moteur et d'un rapport de transmission d'un véhicule à transmission réglable en continu (3) comprenant les étapes suivantes selon lesquelles :

   - on détermine un signal représentant une demande du conducteur, ce signal étant une demande du conducteur pour une marche avant relative,
   - on détermine un couple moteur de consigne (205) en tenant compte du signal représentant la demande du conducteur,
   - on détermine un rapport de transmission (206),

   **caractérisé en ce qu'**
   en tenant compte du signal représentant la demande du conducteur, on calcule un rapport de transmission de consigne (206), et
   plusieurs champs de caractéristiques ou procédés de calcul sont prévus pour déterminer la demande de marche avant relative du conducteur (204, 204'), et
   on utilise les champs de caractéristiques ou les procédés de calcul en fonction de la position d'un levier sélecteur (118).

22. Procédé selon la revendication 21,
   **caractérisé en ce que**
   la demande de marche avant relative du conducteur est une demande de puissance (204).

23. Procédé selon la revendication 21 ou 22,
   **caractérisé en ce que**
   la demande de marche avant relative du conducteur est une demande de couple d'entraînement relatif du conducteur (204').

24. Procédé selon l'une quelconque des revendications 21 à 23,
   **caractérisé en ce que**
   pour déterminer le couple moteur de consigne (205),

   - on compare la demande de puissance relative du conducteur (204) à une puissance de sortie (311) nécessaire pour avoir une vitesse constante, en utilisant la vitesse actuelle (121),
   - on détermine la puissance d'entraînement maximale (312) en utilisant la vitesse de rotation de moteur (122),
   - on détermine la puissance d'entraînement minimale (313) en utilisant la vitesse de rotation de moteur (122),
   - on détermine une vitesse de rotation de référence (314) en utilisant la vitesse de rotation d'entrée (114) de la transmission et la vitesse de rotation de moteur (122),
   - on génère un signal de couple moteur de consigne (316) pour une accélération en utilisant la puissance de sortie nécessaire (311) pour la vitesse constante, la puissance d'entraînement maximale (312), la vitesse de rotation de référence (314), une amplification de convertisseur (323) et la demande de puissance relative du conducteur (204),
   - on génère un signal de couple moteur de consigne (317) pour décélération en utilisant la puissance de sortie (311) requise pour une vitesse constante, la puissance d'entraînement minimale (313), la vitesse de rotation de référence (314), une amplification de convertisseur (323) et la demande de puissance relative du conducteur (204),
   - avec le résultat de la comparaison (315) entre la demande de puissance relative du conducteur (204) et la puissance de sortie (311) nécessaire pour une vitesse constante, on décide si le signal de couple de consigne (316) pour une accélération ou le signal de couple de consigne (317) pour une décélération doivent servir à déterminer le couple moteur de consigne (205).

25. Procédé selon l'une quelconque des revendications 21 à 24,
   **caractérisé en ce que**
   pour déterminer le couple moteur de consigne (205),

   - en utilisant la vitesse actuelle (121) on compare la demande de couple de marche avant relative du conducteur (204') et le couple de sortie (311') nécessaire pour avoir une vitesse constante,

- on détermine le couple d'entraînement maximum (312') en utilisant la vitesse de rotation de moteur (122),
- on détermine le couple de sortie minimum (313') en utilisant la vitesse de rotation de moteur (122),
- en utilisant le signal d'entrée (114) et la vitesse de rotation de sortie (115) on détermine une amplification de couple (314'),
- en utilisant le couple de sortie nécessaire (311') pour avoir une vitesse constante, le couple d'entraînement maximum (312'), l'amplification de couple (314'), une amplification de convertisseur (323) et la demande de couple de sortie relative du conducteur (204') on génère un signal de couple moteur de consigne (316) pour une accélération,
- en utilisant le couple de sortie nécessaire (311') pour la vitesse constante, le couple d'entraînement minimum (313'), l'amplification de couple (314'), l'amplification de convertisseur (323) et la demande de couple de sortie relative du conducteur (204') on génère un signal de couple moteur (317) pour une décélération, et
- avec le résultat de comparaison (315) entre la demande de couple de sortie relatif du conducteur (204') et le couple de sortie (311') nécessaire pour une vitesse constante, on décide si on utilise le signal de couple de consigne (316) pour une accélération ou le signal de couple de consigne (317) pour une décélération, pour déterminer le couple moteur de consigne (205).

**26.** Procédé selon l'une quelconque des revendications 21 à 25,
**caractérisé en ce que**
pour déterminer le rapport de transmission de consigne (206),

- en tenant compte de la demande de marche avant relative du conducteur (204, 204') et des conditions de fonctionnement (505, 506, 507, 515, 516) on détermine une vitesse de rotation de consigne stationnaire (511),
- à partir de la vitesse de rotation de consigne stationnaire (511) et en tenant compte des conditions de fonctionnement (516), on détermine une vitesse de rotation de consigne dynamique (512),
- à partir de la vitesse de rotation de consigne dynamique (512) et en tenant compte des conditions de fonctionnement (505, 508, 509, 510, 515), on détermine une démultiplication de consigne stationnaire (513), et
- à partir de la démultiplication de consigne stationnaire (513) et en tenant compte des conditions de fonctionnement (515, 516), on détermine le rapport de transmission de consigne (206).

**27.** Procédé selon l'une quelconque des revendications 21 à 26,
**caractérisé en ce qu'**
on limite la démultiplication (602) pour déterminer le rapport de transmission de consigne (206) par la détermination d'une vitesse de rotation de consigne (511, 512, 601).

**28.** Procédé selon l'une quelconque des revendications 21 à 27,
**caractérisé en ce qu'**
en commutant du mode de fonctionnement automatique au mode de fonctionnement manuel, on conserve le rapport de transmission.

**29.** Procédé selon l'une quelconque des revendications 21 à 28,
**caractérisé en ce qu'**
en mode de fonctionnement manuel lorsqu'on atteint un seuil de vitesse de rotation, on modifie en continu le rapport de transmission de consigne pour ne pas dépasser ni vers le haut ni vers le bas une limite de vitesse de rotation.

**30.** Procédé selon l'une quelconque des revendications 21 à 29,
**caractérisé en ce qu'**
en mode de fonctionnement manuel, on adapte une information de rapport de vitesse au rapport de transmission actuel choisi.

**31.** Procédé selon l'une quelconque des revendications 21 à 30,
**caractérisé en ce que**
la détermination du rapport de transmission de consigne contient au moins un objet de gestion et plusieurs objets de fournisseur dans le sens d'une structure orientée objet.

**32.** Procédé selon l'une quelconque des revendications 21 à 31,
**caractérisé en ce que**
l'objet de gestion interroge les objets de fournisseur pour savoir s'ils veulent fournir des informations pour déterminer le rapport de transmission de consigne.

**33.** Procédé selon l'une quelconque des revendications 21 à 32,
**caractérisé en ce que**
l'interrogation des objets de fournisseur se fait de manière prioritaire.

**34.** Procédé selon l'une quelconque des revendications 21 à 33,
**caractérisé en ce que**
les objets de fournisseur donnent une vitesse de rotation de consigne et/ou un rapport de transmission de consigne.

**35.** Procédé selon l'une quelconque des revendications 21 à 34,
**caractérisé en ce que**
les objets de fournisseur peuvent donner une autre information indiquant comment le rapport de consigne doit limiter la consigne de vitesse de rotation de consigne.

**36.** Procédé selon l'une quelconque des revendications 21 à 35,
**caractérisé en ce que**
les objets de fournisseur donnent d'autres informations pour déterminer la dynamique de la consigne de vitesse de rotation.

**37.** Procédé selon l'une quelconque des revendications 21 à 36,
**caractérisé en ce que**
les informations pour influencer la dynamique de la consigne de vitesse de rotation sont des constantes de filtre.

**38.** Procédé selon l'une quelconque des revendications 21 à 37,
**caractérisé en ce que**
les informations pour influencer la dynamique de la consigne de vitesse de rotation sont des gradients minimum et/ou maximum de la vitesse de rotation.

**39.** Procédé selon l'une quelconque des revendications 21 à 38,
**caractérisé en ce que**
les informations pour influencer la dynamique de la consigne de rapport de démultiplication sont des constantes de filtre.

**40.** Procédé selon l'une quelconque des revendications 21 à 39,
**caractérisé en ce que**
les informations pour influencer la dynamique de la consigne de rapport de transmission sont des gradients de rapport de transmission minimum et/ou maximum.

Fig.1

**Fig.2**

Fig.3

Fig.4

EP 1 448 403 B1

Fig.5

EP 1 448 403 B1

Fig.6

EP 1 448 403 B1

EP 1 448 403 B1

501  511  502  512  503  513  504

204

505

506

507

508

505

509

510

206

15

16

Fig.7

Fig.8

EP 1 448 403 B1

Fig.9

Fig.10

Fig. 11

Fig.12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6027425 A